# EUROPÄISCHE PATENTSCHRIFT

(11) **EP 2 516 885 B1**
(45) Veröffentlichungstag und Bekanntmachung des Hinweises auf die Patenterteilung: **07.12.2016**
(21) Anmeldenummer: 10810824.2
(22) Anmeldetag: 23.12.2010
(51) Int. Cl.: F16K 13/10, F16K 31/08, F16K 31/06, F16F 9/53

(54) **VENTIL FÜR EINE MAGNETORHEOLOGISCHE FLÜSSIGKEIT**
MAGNETORHEOLOGICAL FLUID VALVE
VANNE A FLUIDE MAGNETORHEOLOGIQUE

(30) Priorität: 23.12.2009 DE 102009060525
(43) Veröffentlichungstag der Anmeldung: 31.10.2012
(73) Patentinhaber: Inventus Engineering GmbH, 6771 St. Anton Im Montafon (AT)
(72) Erfinder: BATTLOGG, Stefan, A-6771 St. Anton i. M. (AT); PÖSEL, Jürgen, A-6700 Bludenz (AT); ELSENSOHN, Gernot, A-6771 St. Anton i.M. (AT)
(74) Vertreter: BSB Intellectual Property Law
(86) Internationale Anmeldenummer: PCT/EP2010/007903
(87) Internationale Veröffentlichungsnummer: WO 2011/076415

(56) Entgegenhaltungen:
- EP-A1- 1 795 428
- WO-A1-2007/014413
- WO-A1-2009/040066
- WO-A2-99/27273
- US-A- 6 019 201
- US-A1- 2006 016 649
- US-B1- 6 471 018

## Beschreibung

Die vorliegende Erfindung betrifft ein Ventil für eine magnetorheologische Flüssigkeit mit einem Strömungskanal, wobei der Durchfluss der magnetorheologischen Flüssigkeit durch den Strömungskanal durch ein auf den Strömungskanal wirkendes magnetisches Feld variiert werden kann. Durch das Magnetfeld wird der Strömungswiderstand durch den Strömungskanal und damit der Durchfluss durch das Ventil entsprechend beeinflusst.

Magnetorheologische Flüssigkeiten bestehen üblicherweise aus einer Suspension von kleinen ferromagnetischen Partikeln wie beispielsweise Carbonyleisenpulver, welche in einer Trägerflüssigkeit fein verteilt sind. Die Partikel weisen typischerweise Durchmesser zwischen 0,1 und 50 Mikrometern auf und bilden unter Einfluss eines magnetischen Feldes kettenartige Strukturen, sodass die Viskosität der magnetorheologischen Flüssigkeit unter Einfluss eines Magnetfelds erheblich zunimmt. Die Viskositätsänderung geschieht dabei sehr schnell im Bereich von wenigen Millisekunden und darunter und ist völlig reversibel.

Wesentliche Vorteile eines Ventils mit einer magnetorheologischen Flüssigkeit sind sehr schnelle Schaltzeiten im Bereich von wenigen Millisekunden oder weniger und die Möglichkeit auf bewegte mechanische Elemente zu verzichten.

Im Stand der Technik sind solche Ventile für magnetorheologische Flüssigkeiten bekannt geworden, bei denen der Durchfluss durch das Ventil über einen Elektromagneten gesteuert wird. Durch die direkte Abhängigkeit des Strömungswiderstandes von dem magnetischen Feld eines Elektromagneten lässt sich ein solches Ventil einfach steuern.

Nachteilig bei einem solchen System nach dem Stand der Technik ist aber der permanente Energiebedarf. Um das Magnetfeld aufrecht zu halten, muss ständig Strom in der Spule des Elektromagneten fließen. Insbesondere bei Anwendungen, bei denen ständig ein Magnetfeld anliegen muss, ist der Energiebedarf eines solchen Systems deshalb hoch.

Um den Energiebedarf solcher Ventile zu senken, sind Ventile für magnetorheologische Flüssigkeiten im Stand der Technik bekannt geworden, bei denen ein Permanentmagnet einen Arbeitspunkt des Ventils vorgibt und Abweichungen vom Arbeitspunkt mittels eines Elektromagneten eingestellt werden. Damit lässt sich der Energiebedarf in vielen Fällen senken, da bei einem Anwendungsfall, bei dem der Durchfluss durch das Ventil nur in engen Grenzen variiert werden muss, nur die jeweilige geringe Änderung des Magnetfeldes elektrisch erzeugt werden muss. Außerdem lässt sich durch den Einsatz eines Permanentmagneten eine Notlauffunktion sicherstellen, falls die Stromversorgung einbricht oder ein Defekt an der Ansteuerung oder der Spule auftritt.

Jede Abweichung von diesem Arbeitspunkt benötigt aber wieder Energie für den Elektromagneten. Dauerhafte Abweichungen benötigen folglich dauerhaft Energie. Deshalb ist ein solches Ventil insbesondere dann vorteilhaft, wenn ein bevorzugter Arbeitspunkt existiert, der einen Hauptteil der Betriebszeit eingenommen wird.

In vielen Anwendungen lässt sich aber kein bevorzugter Arbeitspunkt bestimmen, der für einen Hauptteil der Betriebszeit vorliegt. Das ist beispielsweise bei einem Ventil der Fall, das gleich häufig vollständig offen und vollständig geschlossen ist.

Ein erheblicher Energieverbrauch liegt aber z.B. auch dann vor, wenn der Durchflusswiderstand des Ventils ständig verändert wird, oder wenn unterschiedliche Zustände für jeweils längere Zeiträume vorliegen. In solchen oder anderen Fällen können verschiedene Zustände auch gleichberechtigt vorliegen, sodass ein Permanentmagnet zur Vorgabe eines bevorzugten Arbeitspunkts des Ventils nur eine geringe oder sogar gar keine Energieeinsparung bringt.

Ventile dieser Art sind beispielsweise aus den Druckschriften WO9927273, US20060016649, US6471018, US6019203, EP1759428 und WO2009040066 bereits bekannt.

Vor dem Hintergrund des beschriebenen Standes der Technik ist es deshalb die Aufgabe der vorliegenden Erfindung, ein Ventil für magnetorheologische Flüssigkeiten zur Verfügung zu stellen, welches variabel einstellbar ist und welches einen geringeren Energiebedarf aufweist.

Diese Aufgabe wird durch ein erfindungsgemäßes Ventil für magnetorheologische Flüssigkeiten mit den Merkmalen des Anspruchs 1 gelöst. Das erfindungsgemäße Verfahren ist Gegenstand von Anspruch 10.

Bevorzugte Weiterbildungen sind Gegenstand der Unteransprüche.

Weitere Vorteile und Merkmale der vorliegenden Erfindung ergeben sich aus den Ausführungsbeispielen.

Das erfindungsgemäße Ventil für eine magnetorheologische Flüssigkeit umfasst wenigstens einen von der magnetorheologischen Flüssigkeit durchströmbaren Strömungskanal, dessen Durchfluss gesteuert werden soll. Der Strömungskanal bzw. wenigstens ein Strömungskanal ist dabei wenigstens einem veränderbaren Magnetfeld aussetzbar, so dass der Strömungswiderstand des Strömungskanals und damit auch des Ventils über das Magnetfeld in dem Strömungskanal einstellbar ist. Das Magnetfeld ist durch eine zumindest teilweise aus hartmagnetischem Material bestehende Magneteinrichtung dauerhaft erzeugbar. Dabei ist die Magnetisierung des hartmagnetischen Materials durch wenigstens einen magnetischen Impuls einer Magnetfelderzeugungseinrichtung dauerhaft veränderbar, um das in dem Strömungskanal wirkende Magnetfeld und damit den Strömungswiderstand des Strömungskanals dauerhaft zu verändern.

Ein erfindungsgemäßes Ventil hat viele Vorteile, vor allem die mögliche Änderung der Magnetisierung des Magneten über magnetische Impulse der Magnetfelderzeugungseinrichtung. Dadurch wird es ermöglicht, dass mit beispielsweise einem einzigen kurzzeitigen Impuls die magnetischen Eigenschaften der Magneteinrichtung dauerhaft verändert werden können. Für den kurzzeitigen magnetischen Impuls ist nur über einen kurzen Zeitraum Energie nötig, während anschließend das Feld der Magneteinrichtung dauerhaft vorliegt.

Die Anwendungsmöglichkeiten für ein Ventil nach vorliegender Erfindung sind vielfältig, beispielsweise kann es in einem Stoßdämpfer eingesetzt werden.

Bei dem erfindungsgemäßen Ventil ist es vorzugsweise über das im Strömungskanal wirkende Magnetfeld möglich, ein Strömen der magnetorheologischen Flüssigkeit zu verhindern. Abhängig vom wirkenden Magnetfeld kann das Ventil bis zu einer gewissen Druckdifferenz komplett sperren und bei einer höheren Druckdifferenz einen entsprechenden Strömungswiderstand verursachen.

Gerade bei einer mobilen Anwendung, wie beispielsweise einem Ventil im Dämpfer einer Knieprothese, wo je nach Träger und Tätigkeit andere Dämpfungseigenschaften gefordert werden, ist eine Optimierung auf einen Arbeitspunkt nicht vorteilhaft und der permanente Energiebedarf ein erheblicher Nachteil. Hier bietet die Erfindung den erheblichen Vorteil, dass ein einziger Impuls ausreicht, um dauerhaft einen Wert vorzugeben. Steht die Person mit der Knieprothese beispielsweise länger an einer Stelle, so kann für diese gesamte Zeitdauer das Dämpfungsverhalten unverändert bleiben. Dadurch kann ein erheblicher Anteil an Energie eingespart werden, ohne dass damit ein Komfortverlust entsteht. Im Gegenteil kann die Einstellung des Kniegelenks an die jeweilige Situation optimal angepasst werden und trotzdem noch die Lebensdauer der zur Stromversorgung eingesetzten Batterie erhöht werden.

Das durch die Magneteinrichtung im Strömungskanal erzeugte Magnetfeld wirkt ohne Energieversorgung und behält seine Feldstärke dauerhaft bei, solange es nicht durch äußere Umstände wie beispielsweise andere Magnetfelder, Temperatureinflüsse oder natürliche Alterungsprozesse beeinflusst wird. Beispielsweise bricht das Magnetfeld mit Erreichen der Curie-Temperatur des Magneten stark ein.

Auch bei einer häufigeren Änderung des Arbeitspunktes eines erfindungsgemäßen Ventils wird nicht ständig, sondern nur für das kurze Zeitintervall des magnetischen Impulses Energie benötigt. So ist auch bei häufiger Verstellung eine Energieersparnis gegenüber einem Ventil nach dem Stand der Technik möglich, wobei die Energieersparnis umso größer wird je seltener der Arbeitspunkt verstellt wird.

Ein weiterer Vorteil ist die Möglichkeit, eine Notlauffunktion zu ermöglichen. Zeigt beispielsweise das Absinken der Versorgungsspannung an, dass die Energieversorgung gleich einbricht (Akkus fast leer, Netzausfall...), dann kann mit einem letzten Impuls ein definierter Zustand des Ventils eingestellt werden.

Als dauerhaft gilt im Sinne dieser Anmeldung ein Zeitraum, der um ein Vielfaches länger ist als die Dauer des magnetischen Impulses. Insbesondere Zeiträume von wenigstens mehreren Sekunden, Minuten, Stunden, Tagen oder länger sind damit gemeint. Die eingestellte Magnetisierung muss aber ausdrücklich nicht ewig gleich bleiben, da sie natürlichen Schwankungen und Abschwächungserscheinungen unterliegen kann. Im Unterschied dazu ist die Zeitdauer des zur Veränderung benötigten magnetischen Impulses relativ kurz. Die Zeitdauer des insbesondere einzigen kurzzeitigen Impulses liegt dabei vorzugsweise unter 1 Minute und vorzugsweise unter 1 Sekunde.

Das Verhältnis zwischen der Zeitlänge nahezu gleich bleibenden dauerhaften Magnetisierung der Magneteinrichtung und der Dauer des magnetischen Impulses ist in der Regel größer 10, insbesondere größer 100 und vorzugsweise größer 1.000. Verhältnisse von 10.000, 100000, einer Million und noch viel größere Werte sind möglich und bevorzugt.

Als hartmagnetisch gilt ein Werkstoff hier dann, wenn seine Koerzitivfeldstärke über 1kA/m und insbesondere über 10kA/m liegt. Der Bereich mit hartmagnetischen Eigenschaften wird in Folge "Magnet" genannt, wobei unter diesem Begriff im Sinne dieser Anmeldung auch ein Dauer- oder Permanentmagnet verstanden werden kann.

Vorzugsweise ist die dauerhafte Magnetisierung der Magneteinrichtung durch wenigstens einen magnetischen Impuls der Magnetfelderzeugungseinrichtung auf einen beliebigen Wert zwischen Null und der Remanenz einstellbar. Dabei kann vorzugsweise auch die Polarität der Magnetisierung veränderbar sein.

Es ist möglich, das im Strömungskanal wirkende Magnetfeld zu variieren, ohne die Magnetisierung des hartmagnetischen Bereichs der Magneteinrichtung dauerhaft zu verändern. Vorzugsweise kann mit der Magneteinrichtung ein dauerhaftes statisches Magnetfeld erzeugbar sein, welches durch ein dynamisches Magnetfeld der Magnetfelderzeugungseinrichtung oder auch einer weiteren Magnetfelderzeugungseinrichtung überlagerbar ist, ohne das dauerhafte Magnetfeld des Magneten dadurch zu verändern.

Besonders bevorzugt umfasst die Magnetfelderzeugungseinrichtung wenigstens eine elektrische Spule oder ist als eine solche ausgeführt. Elektrische Spulen können starke Magnetfelder erzeugen und können kleinbauend ausgeführt sein, sodass sie sich auch für den Einsatz an kleinen Ventilen eignen. In Folge wird die Magnetfelderzeugungseinrichtung einfach als Spule bezeichnet, es können aber auch andere Einrichtungen und Verfahren wie beispielsweise ein relativ starker Permanentmagnet eingesetzt werden.

Ein Elektromagnet bzw. eine Spule eignet sich vor allem deshalb als Magnetfelderzeugungseinrichtung, da in kurzer Zeit sehr starke Magnetfelder erzeugt werden können und die Verstellung rein elektrisch erfolgen kann. Zudem kann die gewünschte Magnetisierung gezielt eingestellt werden. Der eingestellte Wert kann beliebig zwischen Null und der maximalen Remanenz des Magneten liegen bzw. zwischen negativer und positiver Remanenz wenn der Magnet umgepolt wird.

Vorzugsweise ist wenigstens eine Kondensatoreinrichtung vorgesehen, um die Energie zur Erzeugung wenigstens eines magnetischen Impulses zur Verfügung zu stellen.

Vorteilhafterweise ist wenigstens ein Energiespeicher und insbesondere eine Batterie vorgesehen, um die Energie zur Erzeugung wenigstens eines magnetischen Impulses zur Verfügung zu stellen.

In allen Ausgestaltungen ist vorzugsweise wenigstens eine Steuer- und/oder Kontrolleinrichtung vorgesehen, um magnetische Impulse der Magnetfelderzeugungseinrichtung gesteuert und/oder geregelt auszugeben.

Zur Erfassung der Ist-Daten und/oder der Stellung des Ventils kann wenigstens eine Sensoreinrichtung vorgesehen sein. Es können Sensoren zur direkten oder indirekten Bestimmung der Magnetisierung der Magneteinrichtung verwendet werden. Diese Sensoren bzw. deren Messergebnisse können von einer Steuer- oder Regeleinrichtung verwendet werden, um die Stärke der zu erzeugenden magnetischen Impulse zu bestimmen.

Beispielsweise kann ein Magnetfeldsensor vorgesehen sein, der die magnetische Feldstärke in dem Strömungskanal ermittelt oder der ein Maß für die magnetische Feldstärke in dem Strömungskanal ableitet. Direkt vom Magnetfeld abhängige physikalische Größen können erfasst und aus ihnen das Magnetfeld bestimmt werden. Möglich ist auch der Einsatz weiterer Sensoren wie beispielsweise eines Temperatursensors. Zudem können Kraft-, Druck-, Weg- oder Beschleunigungsaufnehmer eingesetzt werden um Daten für eine Steuerung bzw. Regelung zu gewinnen.

Mittels geeigneter Sensoren und mindestens einer Spule kann die Form und Stärke des erzeugten Magnetfeldes beeinflusst werden. Die Sensoren können in das Ventil integriert sein oder externe Parameter messen, welche Einfluss auf die Regelung haben.

Es ist bevorzugt wenigstens eine Schwingkreiseinrichtung vorzusehen, um ein gedämpftes magnetisches Wechselfeld zur Entmagnetisierung erzeugen zu können.

Vorzugsweise ist wenigstens ein Strömungskanal als flacher Spalt ausgeführt oder umfasst einen flachen Spalt, der gerade oder auch gebogen sein kann. Unter einem gebogenen flachen Spalt wird im Sinne dieser Anmeldung ein Segment eines Kreisrings bzw. ein kompletter Kreisring verstanden. In einem Spalt lassen sich besonders homogene Magnetfelder erzeugen.

Um auf kleinstem Bauraum einen großen Einstellbereich zu erzielen, können mehrere einzelne Spalte eingesetzt werden. Der magnetische Kreis kann dabei klein gehalten werden, wenn die einzelnen Spalte übereinander liegen (seriell im magnetischen Kreis). Die vom Magnetfeld durchflutete Querschnittsfläche ändert sich mit der Spaltzahl nicht, die Feldstärke muss aber auf die Summe der einzelnen Spalthöhen angepasst werden.

Vorteilhafterweise besteht die Magneteinrichtung zumindest teilweise aus einem hartmagnetischen Material, dessen Koerzitivfeldstärke größer als 1kA/m und insbesondere größer als 5kA/m und vorzugsweise größer als 10kA/m ist. Dieser Teil kann auch als Magnet bzw. Kern bezeichnet werden, der die zu erzeugende Feldstärke dauerhaft zur Verfügung stellt.

Zumindest teilweise kann die Magneteinrichtung auch aus einem Material bestehen, welches eine Koerzitivfeldstärke kleiner als 1000 kA/m und vorzugsweise kleiner 500 kA/m und besonders bevorzugt kleiner als 100 kA/m aufweist.

Vorzugsweise besteht das Ventil und insbesondere die Magneteinrichtung wenigstens teilweise aus einem solchen Material und ist derart strukturiert, dass im Strömungskanal eine magnetische Flussdichte von wenigstens 0,3 T und insbesondere wenigstens 0,5 T erzeugbar ist.

In allen Ausgestaltungen ist es bevorzugt, dass der Strömungskanal einem inhomogenen Magnetfeld aussetzbar ist. Die Inhomogenität des Magnetfeldes in dem Strömungskanal ist dabei insbesondere so groß, dass das Verhältnis zwischen maximaler und minimaler Feldstärke größer als 50 und insbesondere größer als 1.000 und vorzugsweise größer als 50.000 beträgt.

Dabei bleibt die Form und Stärke des Magnetfelds in der Magneteinrichtung bzw. im Strömungskanal dauerhaft erhalten. Bei Bedarf kann die Form und Stärke des Magnetfelds durch zumindest einen magnetischen Impuls der Magnetfelderzeugungseinrichtung dauerhaft verändert werden. Die Form und Stärke des Magnetfelds kann auch durch eine gezielte Modulation zeitlich oder örtlich variabel verändert werden.

Teile der Magneteinrichtung und/oder die Magnetfelderzeugungseinrichtung können relativ zueinander bewegbar sein.

In allen Fällen sorgt insbesondere die Magneteinrichtung für einen geschlossenen magnetischen Kreis um den Strömungskanal, wobei das Magnetfeld im Strömungskanal durch den Magneten insbesondere ohne äußere Energiezufuhr erzeugbar ist.

Mit der oder wenigstens einer Magnetfelderzeugungseinrichtung kann eine dauerhafte Einstellung und/oder Veränderung der Magnetisierung der Magneteinrichtung durchgeführt werden. Vorzugsweise wird dazu eine Elektrospule verwendet, welche durch einen Strompuls einen magnetischen Impuls erzeugt, welcher das Feld der Magneteinrichtung überlagert. Durch eine gezielte Steuerung der Stromstärke der elektrischen Spule kann ein definierter magnetischer Impuls erzeugt werden, der aufgrund der verbleibenden Magnetisierung des Magneten eine entsprechende, genau definierte Feldstärke in der Magneteinrichtung einstellt. Abhängig von der Stärke des Impulses kann die Magnetisierung des Magneten verstärkt, abgeschwächt, aufgehoben oder umgepolt werden.

In allen Ausgestaltungen ist es denkbar, das voreingestellte Magnetfeld des Magneten durch ein zusätzliches Magnetfeld einer Spule zu überlagern, ohne die dauerhafte Magnetisierung des Magneten zu verändern. Hierzu kann entweder die bereits vorhandene Spule oder eine zusätzliche Spule verwendet werden.

Dies ist beispielsweise vorteilhaft, wenn unterschiedliche Arbeitspunkte benötigt werden und bei jedem Arbeitspunkt eine geringfügige, aber kontinuierliche oder diskrete Anpassung erforderlich ist. Langsamere Vorgänge wie beispielsweise ein Temperaturausgleich können über eine Änderung der Magnetisierung erfolgen, während schnelle Vorgänge in Echtzeit von dem zusätzlichen Spulenfeld überlagert werden können.

Vorteilhafterweise ist wenigstens eine Kondensatoreinrichtung mit einem oder mehreren elektrischen Kondensatoren vorgesehen. Diese bietet die Möglichkeit Energie für einen oder mehrere magnetische Impulse zu speichern, sodass auch bei Verwendung einer Stromquelle mit geringer Leistung nach Aufladen des Kondensators ein gewünschter magnetischer Impuls ausgelöst werden kann.

Das Bereitstellen der Energie in einer Kondensatoreinrichtung kann die Reaktionsgeschwindigkeit des Systems erhöhen, zudem beschleunigt eine höhere Spannung den Feldaufbau durch die Spule. Möglich ist auch über die Ladespannung der Kondensatoreinrichtung die Stärke des magnetischen Impulses zu bestimmen ohne die Pulsdauer zu variieren. Anstatt oder zusätzlich zu einer Kondensatorvorrichtung können auch andere Vorrichtungen verwendet werden um zumindest einen Teil der Energie für mindestens einen Impuls zu speichern. Vorstellbar sind beispielsweise induktive Speicher wie Spulen oder Transformatoren.

Der Magnet der Magneteinrichtung muss im bestehenden magnetischen Kreis einerseits eine hohe magnetische Feldstärke erzeugen können, andererseits darf die zur Ummagnetisierung nötige Energie nicht zu groß sein. Denkbar ist nur ein Teil der Magneteinrichtung, den Magneten, aus hartmagnetischem Material zu fertigen und den Rest aus einem Material mit geringem magnetischem Widerstand (Reluktanz) und hoher Sättigungsflussdichte. Vorteilhafter Weise ist dieser Magnet in der Spule bzw. in deren unmittelbarer Nähe angeordnet, da das Spulenfeld zur Ummagnetisierung dort am stärksten ist und auch am besten kontrolliert werden kann.

Möglich ist aber auch die gesamte Magneteinrichtung aus hartmagnetischem Material zu fertigen, wobei dann verhältnismäßig mehr Material zur Erzeugung des Feldes zur Verfügung steht bzw. die magnetischen Anforderungen an das Material kleiner werden.

Vorteilhafterweise besteht der Magnet wenigstens teilweise aus einem Material, welches eine Koerzitivfeldstärke größer als 1 kA/m (= 1.000 Ampere/Meter) und insbesondere größer als 5 kA/m und vorzugsweise größer als 10 kA/m aufweist. Insbesondere sind auch Koerzitivfeldstärken von 30 kA/m, 40 kA/m oder 50 kA/m oder auch 100 kA/m oder 150 kA/m möglich.

Besonders bevorzugt besteht der Magnet bzw. die Magneteinrichtung wenigstens teilweise aus einem Material, welches eine Koerzitivfeldstärke kleiner als 1500 kA/m (= 1.500.000 Ampere/Meter) und vorzugsweise kleiner 500 kA/m und besonders bevorzugt kleiner als 200 kA/m aufweist. Die Koerzitivfeldstärke liegt besonders bevorzugt in einem Bereich zwischen 10 kA/m und 200 kA/m.

Bevorzugt besteht die Magneteinrichtung wenigstens teilweise aus einem Material wie Alnico (AlNiCo) oder einer magnetischen Stahllegierung oder einem Material mit vergleichbaren magnetischen Eigenschaften. Alnico ist eine Legierung aus Aluminium, Nickel und Cobalt und teilweise auch anderen Elementen wie beispielsweise Eisen oder Kupfer. Aus Alnico können Permanentmagnete hergestellt werden, die üblicherweise eine Remanenz von 0,7 bis 1,2T und eine Koerzitivfeldstärke von 30 bis 150kA/m oder mehr aufweisen können. Ein Alnico-Magnet weist relativ hohe Koerzitivfeldstärken auf und setzt äußeren Magnetfeldern dementsprechend einen hohen Widerstand entgegen, sodass eine Ummagnetisierung bzw. Entmagnetisierung im geschlossenen magnetischen Kreis mit normalen in der Natur vorkommenden Feldern nicht erreicht wird. Andererseits ist die Koerzitivfeldstärke im Vergleich z.B. zu Neodym relativ gering, sodass mit einem Elektromagneten bzw. einer elektrischen Spule eine Entmagnetisierung mit relativ geringem Energieaufwand möglich ist.

Vorteilhaft an Alnico sind auch der Verlauf der Entmagnetisierungskurve (2. Quadrant im BH-Diagramm), die hohe Temperaturstabilität und die guten chemischen Eigenschaften relativ zu anderen üblichen Magnetmaterialien.

Die Stärke der Magnetisierung hängt von der Stärke des magnetischen Impulses, nicht aber von der Länge des magnetischen Impulses ab sobald eine gewisse Mindestimpulsdauer erreicht wird. Als Mindestimpulsdauer wird jener Zeitraum definiert, nachdem das magnetisierbare Material eine der jeweiligen Impulsstärke entsprechende Magnetisierung erreicht hat. Insbesondere wird darunter jener Zeitraum verstanden, nachdem das magnetisierbare Material eine der jeweiligen Impulsstärke entsprechende maximale Magnetisierung erreicht hat. Nach Erreichen der Mindestimpulsdauer erhöhen längere Impulse gleicher Stärke die Magnetisierung nicht mehr. Als Maß für die magnetische Impulsstärke kann die Stromstärke der Spule bzw. die Ladespannung des Kondensators verwendet werden.

Diese Mindestimpulsdauer hängt von vielen Faktoren ab, beispielsweise beeinflusst der Aufbau und das Material des magnetischen Kreises die Ausbildung von Wirbelströmen, welche einer Änderung des Magnetfeldes entgegenwirken bzw. dessen Änderung verzögern. Innerhalb dieser Mindestimpulsdauer kann die Stärke des Magnetischen Pulses auch durch die Pulsdauer variiert werden.

Die Impulslänge der magnetischen Impulse ist insbesondere kleiner als 1 Minute, vorzugsweise ist die Impulslänge kleiner als 1 Sekunde und besonders bevorzugt kleiner als 10 Millisekunden. Für eine dauerhafte Veränderung und Einstellung der Magnetisierung des Magneten können magnetische Impulse mit einer Impulslänge im Bereich von wenigen Mikrosekunden ausreichen, wobei anschließend die eingestellte Magnetisierung des Magneten dauerhaft über Minuten, Stunden, Tage und noch größere Zeiträume zur Verfügung steht, bis mit dem nächsten magnetischen Impuls die Magnetisierung erneut verändert wird. Das Verhältnis der Zeitdauer der dauerhaften Veränderung der Magnetisierung des Magneten zu der Impulslänge des magnetischen Impulses ist größer 10 und insbesondere größer 1000 und kann sehr viel größer sein. Wenn es in kurzer zeitlicher Abfolge nötig wird, mehrere magnetische Impulse zur Änderung der eingestellten Magnetisierung des Magneten auszugeben, kann die Zeitdauer der Veränderung der Magnetisierung des Magneten durch die magnetischen Impulse auch kleiner als 10 werden. Das ändert aber nichts daran, dass ohne weitere magnetische Impulse der Zustand der Magnetisierung des Magneten noch weiterhin fortdauern würde.

Üblicherweise begrenzt die Einrichtung zur Erzeugung des magnetischen Impulses die minimale Impulsdauer, Zeiten im Bereich von Hundertstel- oder Zehntelsekunden sind ebenso möglich wie wenige Millisekunden oder weniger.

Da der Strömungskanal dem magnetischen Fluss einen relativ hohen Widerstand entgegensetzt sind kleine Spalthöhen vorteilhaft. Bewährt haben sich Spalthöhen im Bereich von 0,5 bis 2 mm, wobei in bestimmten Anwendungen auch Bereiche von 0,1 bis 10 mm oder auch 0,01 bis 100 mm denkbar sind.

Die Spaltlänge ist im Wesentlichen abhängig von der maximal zu erreichenden Gegenkraft und der Strömungsgeschwindigkeit. Die Kettenbildung der Partikel im Magnetfeld dauert eine gewisse Zeit (dwell time, üblicherweise kleiner als 1ms). Während dieser Zeit wird die dem Magnetfeld entsprechende Druckdifferenz aufgebaut. Ist die Spaltlänge kürzer als das Produkt aus dwell time und Strömungsgeschwindigkeit, dann passieren die Partikel den Strömungskanal bevor die Kettenbildung vollständig abgeschlossen ist. Die erreichbare Druckdifferenz sinkt dabei deutlich ab, das System arbeitet nicht effizient.

Durch konstruktive Maßnahmen kann beispielsweise eine Bündelung der magnetischen Feldlinien erzielt werden, wodurch in dem Spalt bzw. Strömungskanal eine noch höhere Flussdichte ermöglicht wird. Dabei kann über das Verhältnis der durchfluteten Flächen das Verhältnis der Flussdichten im Magneten bzw. im Strömungskanal beeinflusst werden.

Bei bestimmten Applikationen ist es von Vorteil, wenn nicht nur die Stärke sondern auch die Form des Magnetfelds im Strömungskanal verändert werden kann. Wird das Ventil beispielsweise als Stoßdämpfer eingesetzt, kann über ein inhomogenes Feld der Strömungskanal in verschiedene Bereiche aufgeteilt werden.

Bereiche mit keinem oder nur sehr geringem Feld werden als Durchlassabschnitte und Bereiche mit starkem Feld als Sperrabschnitte bezeichnet. Die dazwischen liegenden Bereiche sind die Übergangsabschnitte, in denen die Feldstärke von einem tiefen auf einen höheren Wert ansteigt.

Durch einen Bypass- bzw. Durchlassabschnitt wird ein Nulldurchgang des Kraft-Geschwindigkeitsverlaufs angestrebt, bei dem sich ein ruhender Kolben schon bei kleinen oder kleinsten Kräften zu bewegen beginnt und somit auftretende Stöße dämpft.

Bei kleinen Geschwindigkeiten strömt das magnetorheologische Fluid ausschließend durch den Bypass. Mit steigender Strömungsgeschwindigkeit erhöht sich der Druckverlust im Bypass wodurch die magnetorheologische Flüssigkeit in immer größeren Breichen des Übergangsabschnitts zu strömen beginnt. Je höher die Druckdifferenz, desto breiter wird also der Bypass und desto kleiner wird der Übergangsabschnitt. Der Kraft-Geschwindigkeitsverlauf des Dämpfers flacht durch den Übergangsabschnitt ab.

Wenn ein kritischer Wert erreicht wird, bei dem die Schubspannung des magnetorheologischen Fluids im Sperrabschnitt erreicht und überschritten wird, strömt die magnetorheologische Flüssigkeit im gesamten Strömungskanal. Dadurch steigt der Druck bei weiter steigender Geschwindigkeit weniger stark an als zuvor.

Dieses Verhalten, der Nulldurchgang und der abflachenden Verlauf der Kraft-Geschwindigkeitskurve, ist vor allem bei Fahrraddämpfern erwünscht. Vor allem durch den sanften Übergang vom "Low Speed"- in den "High Speed"-Bereich zeichnet sich ein Dämpfer durch hohen Fahrkomfort und erhöhte Sicherheit durch besseren Fahrbahnkontakt aus.

Ein erfindungsgemäßes Ventil ermöglicht es, nicht nur die Stärke sondern auch die Form des Magnetfelds durch einen Impuls verändern und ohne weitere Energiezufuhr dauerhaft halten zu können.

Möglich wird dies beispielsweise wenn mehrere Spulen einer Magnetfelderzeugungseinrichtung auf einen Magneten wirken und so lokal unterschiedliche Magnetisierungen bewirken. Es ist vorteilhaft wenn der Magnet dabei in unmittelbarer Nähe des Strömungskanals ist, denn die lokal unterschiedliche Magnetisierung des Magneten kann so ein inhomogenes Magnetfeld im Strömungskanal erzeugen.

Umgekehrt kann es von Vorteil sein, wenn Magnet und Strömungskanal an verschiedenen Stellen des Magnetkreises voneinander beabstandet sind, wobei Magnet und Strömungskanal über feldführende Elemente wie Pole magnetisch miteinander verbunden sind. Durch die feldführenden Elemente kann ein möglicherweise lokal im Magneten inhomogenes Feld gleichförmig werden und homogen im Strömungskanal wirken. Vor allem wenn mehrere Magnetfelderzeugungseinrichtungen gemeinsam auf einen Strömungskanal wirken kann so ein Aufbau besonders vorteilhaft sein.

Die Erfindung ist auch auf einen Stoßdämpfer gerichtet, wobei in dem Stoßdämpfer oder an dem Stoßdämpfer ein zuvor beschriebenes Ventil eingesetzt wird, um die Dämpfung einzustellen oder zu beeinflussen.

Stoßdämpfer mit magnetorheologischer Flüssigkeit, welche nach dem Stand der Technik aufgebaut sind, können mit vergleichsweise geringem Aufwand umgebaut werden, um das erfindungsgemäße Verfahren und die daraus resultierenden Vorteile nützen zu können.

Möglich und bevorzugt ist auch ein Stoßdämpfer mit wenigstens einem in den Kolben integrierten Ventil, wobei die Magneteinrichtung im Kolben angeordnet ist und der den Kolben umgebende Zylinder kein Teil der Magneteinrichtung sein muss und sich die Magnetfelderzeugungseinrichtung außerhalb des Zylinders befinden kann.

Die Erfindung betrifft auch eine Düse für magnetorheologische Flüssigkeiten, wobei die Konstruktion der Düse im Wesentlichen einem zuvor beschriebenen Ventil entspricht. Mit Düse wird hier ganz allgemein ein System bezeichnet, bei dem der Fluss der magnetorheologische Flüssigkeit zuerst eine Querschnittsänderung erfährt, bevor oder nachdem er in den magnetisierbaren Bereich gelangt. Die Querschnittsänderung kann dabei z. B. durch eine Verengung oder eine Erweiterung erfolgen, wobei die Querschnittsänderung stetig oder auch unstetig sein kann.

In bevorzugten Ausgestaltungen weisen einzelne Bereiche der Magneteinrichtung unterschiedliche hartmagnetische Eigenschaften auf, beispielsweise durch unterschiedliche Materialien oder unterschiedliche Geometrien, wodurch sie bei einem entsprechenden Magnetfeld der Felderzeugungseinheit in Bereiche mit fester oder variabler Magnetisierung eingeteilt werden können.

Vorteilhafterweise kann die Magnetfelderzeugungseinheit beabstandet und ohne mechanische Verbindung zur der Magneteinrichtung angeordnet sein oder platziert werden.

Die Magnetfelderzeugungseinrichtung kann eine separate Einheit sein, welche nur zum Ummagnetisieren der Magneteinrichtung mit dieser verbunden sein muss oder in deren Nähe verbracht werden muss, wobei als Verbindung eine magnetische Kopplung ausreichen kann.

In allen Ausgestaltungen ist es bevorzugt, wenn die Energie leitungslos übertragen wird. Die Übertragung kann z.B. über Funk erfolgen.

In allen Ausgestaltungen können mehrere Magnetkreise auf den Strömungskanal wirken, wobei das Magnetfeld in den einzelnen Magnetkreisen unterschiedlich erzeugt werden kann, beispielsweise mit Permanentmagneten, variablen Permanentmagneten, Spulen oder deren Kombination.

Das im Strömungskanal wirkende Magnetfeld kann die Summe der einzelnen Magnetfelder einer beliebigen Anzahl und Kombination von Magneteinrichtungen und Magnetfelderzeugungseinrichtungen sein.

Das erfindungsgemäße Verfahren dient zum Betreiben eines Ventils, in welchem das durch eine Magneteinrichtung dauerhaft erzeugte und in mindestens einem Strömungskanal auf eine magnetorheologische Flüssigkeit wirkende Magnetfeld durch wenigstens einen magnetischen Impuls der Magnetfelderzeugungseinrichtung dauerhaft verändert wird.

Vorzugsweise werden die magnetischen Impulse durch wenigstens eine elektrische Spule erzeugt, die insbesondere über wenigstens einen Kondensator mit der benötigten Energie versorgt wird.

Vorzugsweise werden die magnetischen Impulse durch wenigstens eine elektrische Spule erzeugt, wobei zumindest ein Anteil der für einen Impuls benötigten Energie in einem Kondensator zwischengespeichert wird.

In einer Weiterbildung des Verfahrens wird die für die Anpassung des Ventils an den jeweiligen Betriebszustand benötigte Energie aus durch die Änderungen des Betriebszustandes oder Fehlanpassungen des Ventils ableitbaren Umweltbedingungen wie Vibrationen, Wärme, Druck und anderen abgeleitet.

Vorzugsweise ist die Stärke der dauerhaften Magnetisierung der Magneteinrichtung über die Stärke und/oder die Dauer der magnetischen Impulse der Magnetfelderzeugungseinrichtung veränderbar.

In allen Fällen kann das Magnetfeld zur Abdichtung von zueinander bewegten Teilen verwendet werden, indem entsprechende Strömungs- bzw. Druckunterschiede eingestellt werden.

Vorteilhafterweise sind die magnetischen Impulse kürzer als 1 Minute, vorzugsweise kürzer als 1 Sekunde und insbesondere kürzer als 10 Millisekunden.

Die erzeugbare Feldstärke der Magnetfelderzeugungseinrichtung reicht insbesondere aus, um die hartmagnetischen Teile der Magneteinrichtung bis zu ihrer magnetischen Sättigung zu magnetisieren.

Vorzugsweise werden wenigstens die Form und/oder die Stärke des Magnetfelds der Magneteinrichtung durch wenigstens einen magnetischen Impuls der Magnetfelderzeugungseinrichtung dauerhaft verändert. Dabei können die Impulse auch durch zumindest zwei getrennt ansteuerbare Spulen ausgegeben werden.

Die teilweise oder vollständige Entmagnetisierung der Magneteinrichtung kann durch ein gedämpftes magnetisches Wechselfeld oder wenigstens einen magnetischen Impuls erfolgen. Um eine bestehende Magnetisierung aufzuheben, kann mit einem magnetischen Wechselfeld mit abnehmender Feldstärke gearbeitet werden. Eine bevorzugte Ausführung verwendet dazu einen gedämpften elektrischen Schwingkreis. Möglich ist aber auch der Einsatz einer Folge einzelner magnetischer Impulse mit abnehmender Intensität und jeweils umgekehrter Polarität, um die Magnetisierung des Magneten zu verringern oder aufzuheben. Die Schwingkreisvorrichtung kann aus einer Spule und einem Kondensator bestehen, wobei die Spule der Magnetfelderzeugungseinrichtung auch Teil des Schwingkreises sein kann.

Eine Ausführungsvariante sieht vor, den Ablauf der Entmagnetisierung von der momentanen Magnetisierung des Magneten abhängig zu machen. Beispielsweise kann bei einer schwachen Magnetisierung des Magneten dessen Entmagnetisierung mit dementsprechend schwachen Impulsen erfolgen. Das magnetische Wechselfeld mit abnehmender Intensität kann mit einer dementsprechend geringen Intensität beginnen, wodurch Zeit und Energie eingespart werden können.

Es ist möglich, dass in gewissen zeitlichen Abständen oder nach einer definierten Anzahl an Ummagnetisierungen die Magneteinrichtung gezielt entmagnetisiert wird, um sich aufsummierende Abweichungen auszuschließen. Möglich ist es auch, dass vor jeder Änderung der Magnetisierung die Magneteinheit zunächst entmagnetisiert wird, um definierte Ausgangsbedingungen einzustellen.

Die magnetischen Impulse zur Änderung der Magnetisierung der Magneteinrichtung können automatisch von einer Steuereinrichtung generiert oder manuell ausgelöst werden.

In bestimmten Fällen kann durch die Ausnutzung der Remanenz und des Impulsbetriebs einer Spule, die nicht immer bestromt werden muss, ein Gewichts- und Raumvorteil erzielt werden. Die Drähte der Spule können dünner und leichter dimensioniert werden, weil sie jeweils nur für eine kurze Betriebszeit bestromt werden. Das kann Vorteile bei Gewicht, Platzbedarf und Kosten ergeben.

Deshalb kann es in bestimmten Anwendungen vorteilhaft sein, dass durch den Impulsbetrieb der elektrischen Spule diese deutlich kleiner ausgeführt werden kann als wenn sie auf 100% Einschaltdauer ausgelegt werden muss. Die Erwärmung der Spule spielt im Impulsbetrieb üblicherweise keine Rolle, da kurzzeitige Verlustleistungsspitzen von der eigenen Wärmekapazität der Spule der und der die Spule umgebenden Bauteile abgepuffert werden. Dadurch können sehr hohe Stromdichten in den Windungen toleriert werden bzw. können dünnere Leitungen verwendet werden, solange die mittlere Verlustleistung über längere Zeiträume akzeptabel bleibt.

Üblicherweise kann bei einer kleineren Spule auch der die Spule umgebende magnetische Kreis kleiner ausfallen, weshalb verhältnismäßig viel Bauraum, Material, Gewicht und Kosten eingespart werden können. Dabei steigt lediglich der Energieaufwand für einen einzelnen Puls, was aber je nach Anwendung sehr wohl toleriert werden kann.

In allen Ausgestaltungen kann es möglich sein, die Stromversorgung leitungslos zu realisieren. Die Stromversorgung beispielsweise von der Stromquelle zur Leistungselektronik bzw. von der Leistungselektronik zu der Spule kann über eine elektrische, magnetische oder elektromagnetische Kopplung wie beispielsweise eine Funkstrecke erfolgen. Bei einem Fahrrad kann die Stromversorgung von außen über z. B. eine Docking Station erfolgen. Möglich ist auch die Energieversorgung über eine Energiequelle am Fahrrad auf alle Verbraucher (Gabel, Dämpfer Hinten, Display). Analog kann auch die Stromversorgung bei einem Skischuh, Ski, Mobiltelefon oder zu den Sensoren erfolgen.

Eine Energieversorgung über Funk kann möglicherweise einen schlechteren Wirkungsgrad als eine herkömmliche Verkabelung aufweisen. Außerdem kann die Energieübertragung und deren Reichweite begrenzt sein. Je nach Anwendungsfall stören solche Nachteile aber nicht. Vorteilhaft ist, dass kein Verschleiß der Kontakte auftritt. Die Energieübertragung ist üblicherweise verpolsicher und kurzschlussfest, da sekundärseitig nur eine begrenzte Leistung vorliegt. Weiterhin ist kein Kabelbruch möglich und die Vorrichtung ist insgesamt beweglicher.

Bei solchen Ausgestaltungen ist es aber vorteilhaft, die Energie für zumindest einen Impuls in einem Kondensator zwischenzuspeichern. Dadurch kann die Energieversorgung des Systems eine kleinere Leistung haben, da kurzzeitige Leistungsspitzen eines Impulses vom Kondensator abgefangen werden. Zudem kann auch eine unstetige oder impulsförmige Energieversorgung eingesetzt werden.

Eine mögliche Ausbaustufe der vorliegenden Erfindung ist ein vollkommen autarkes System, welches kabellos mit Energie versorgt wird. Vorstellbar ist beispielsweise die Anwendung bei einem Stoßdämpfer für ein Fahrrad, welcher durch zumindest einen kleinen Magneten an einem Reifen mit Energie versorgt wird. Wenn sich das Rad bewegt wird der Magnet am Dämpfer bzw. einer Spule am Dämpfer vorbeibewegt. Dadurch wird in der Spule eine Spannung induziert, welche im Kondensator für den nächsten Impuls gespeichert werden kann.

Generell können so beliebige "Energy Harvesting"-Einheiten zur Energieversorgung verwendet werden, beispielsweise Solarzellen, thermoelektrische Generatoren oder Piezo-Kristalle. Auch Elemente, welche Vibrationen in Energie wandeln, können so sehr vorteilhaft zur Versorgung eines Dämpfsystems eingesetzt werden. Auch bei einer gut abgestimmten Dämpfung werden in der Regel noch gewisse Vibrationen weitergegeben, die wenigstens noch zum Systemerhalt und zur Versorgung der Steuerung und des Datenerhaltes dienen kann. Wird der Energiewandler durch stärkere Vibrationen angeregt, weil die momentane Einstellung der Dämpfung nicht passt oder das Gelände entsprechend beschaffen ist, dann wird Energie gewandelt und im Kondensator gespeichert. Dauert die Dämpfungsabweichung genügend lange an bzw. ist diese groß genug, dann reicht die Energie im Kondensator um den Dämpfer auf einen neuen optimalen Wert zu verstellen.

Denkbar ist auch eine Ausführung ähnlich wie bei einer elektrischen Zahnbürste, bei der die Energieversorgung durch induktive Kopplung erfolgt. Dabei kann beispielsweise der Akku einer autonomen Dämpfereinheit induktiv geladen werden, ohne dass beschädigte Kabel, korrodierte oder verschmutzte Kontakte den Ladevorgang behindern. Über längere Strecken kann Energie über magnetische Resonanz übertragen werden. Weitere Vorteile und Merkmale der vorliegenden Erfindung ergeben sich aus den Ausführungsbeispielen, welche nun mit Bezug auf die beiliegenden Figuren erläutert werden.

In den Figuren zeigen:
- Fig. 1: eine schematische Darstellung eines erfindungsgemäßen Ventils;
- Fig. 2: ein schematisches Zeitdiagramm der magnetischen Feldstärken beim Ummagnetisieren;
- Fig. 3: einen Querschnitt durch eine Ausführungsvariante eines erfindungsgemäßen Ventils;
- Fig. 4: einen Längsschnitt durch eine Ausführungsvariante als Kolben in einem Dämpfer;
- Fig. 5: eine schematische Darstellung eines alternativen Ventils;
- Fig. 6: eine weitere schematische Darstellung eines alternativen Ventils;
- Fig. 7: eine weiteres Ventil in einer geschnittenen schematischen Darstellung;
- Fig. 8: den Kolben des Ventils nach Fig. 7 in einer schematischen perspektivischen Ansicht;
- Fig. 9: den Kolben des Ventils nach Fig. 7 in einer schematischen Vorderansicht;
- Fig. 10: ein weiteres Ventil in einer geschnittenen schematischen Darstellung;
- Fig. 11: das Ventil nach Fig. 10 bei der Einstellung der Feldstärke;
- Fig. 12: schematische Darstellungen eines Skis mit einem erfindungsgemäßen Dämpfer;
- Fig. 13: eine stark schematische Ansicht eines Ventils, welches durch einen Steuerkreis temporär beeinflussbar ist;
- Fig. 14: ein weiteres Ventil in einer geschnittenen schematischen Darstellung; und
- Fig. 15: das Ventil nach Fig. 14 in einer geschnittenen schematischen Darstellung und einem anderen Betriebszustand.

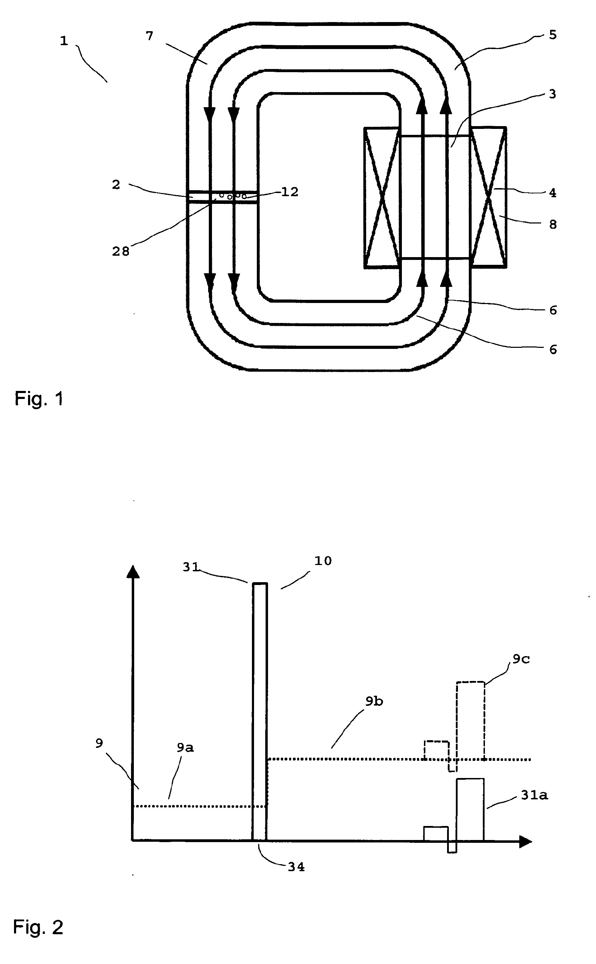

Fig. 1 zeigt eine stark schematische Darstellung eines erfindungsgemäßen Ventils 1. Um die Funktionsweise besser darstellen zu können wurden magnetische Feldlinien 6, dargestellt als Vektoren, eingezeichnet.

Im Bereich des Strömungskanals 2 kann das Magnetfeld 9 des Magneten bzw. der Magneteinrichtung 7 auf die magnetorheologische Flüssigkeit 12 wirken. Im Magnetfeld 9 richten sich die Partikel 30 der magnetorheologischen Flüssigkeit 12 aus und bilden Ketten, wodurch sich die Viskosität der Flüssigkeit erhöht. Über die Stärke des wirksamen Magnetfeldes 9 kann die Viskosität in einem großen Bereich beliebig eingestellt werden.

Von dem Magnetfeld 9 ist auch die Schubspannung abhängig, die die magnetorheologische Flüssigkeit 12 aufbauen kann. Ist die Druckdifferenz im Strömungskanal 2 kleiner als die Schubspannung, wird ein Fließen verhindert. Bis zu dieser Grenze sperrt das Ventil 1 den Durchfluss für die magnetorheologische Flüssigkeit 12.

Der Strömungskanal 2 bildet gemeinsam mit der Magneteinrichtung 7, welche hier den Ringleiter 5 und den Kern 3 bzw. Magneten umfasst, einen geschlossenen magnetischen Kreis. Vorteilhafter Weise ist die Magneteinrichtung 7 zumindest teilweise ferromagnetisch und stellt dem magnetischen Fluss einen geringen Widerstand (Reluktanz) entgegen.

Im Ausführungsbeispiel nach Fig. 1 besteht nur der Kern 3 der Magneteinrichtung 7 aus hartmagnetischem Material, es kann aber ausdrücklich jeder Teil der Magneteinrichtung 7 zumindest teilweise hartmagnetische Eigenschaften aufweisen. Durch einen zuvor angelegten magnetischen Impuls 10 wurde der Kern 3 definiert magnetisiert. Aufgrund seiner hartmagnetischen Eigenschaften behält er diese Magnetisierung dauerhaft bei und wird so selbst zum Dauermagneten. Das Magnetfeld 9, welches den Strömungswiderstand des Ventils 1 bestimmt, wird von dem Kern 3 ohne äußere Energiezufuhr erzeugt und ohne weitere Energiezufuhr dauerhaft beibehalten.

Zusätzlich ist eine Magnetfelderzeugungseinrichtung 8 vorhanden. Die Magnetfelderzeugungseinrichtung 8 ist hier als elektrische Spule 4 ausgeführt und umgibt hier den Kern 3. In vielen Anwendungsfällen reicht es aus, das wirkende Magnetfeld 9 (vgl. Fig. 2) nur bei Veränderungen an den äußeren Betriebsbedingungen zu ändern und den veränderten Bedingungen anzupassen. Für eine Änderung der Magnetisierung der Magneteinrichtung 7 wird mit der Spule ein Magnetfeld 31 erzeugt. Je nach Größe des Spulenstroms erzeugt die Spule 4 ein entsprechendes Magnetfeld 31, welches das Magnetfeld 9 der Magneteinrichtung 7 überlagert. Es genügt ein kurzer magnetischer Impuls 10 der Spule 4 bzw. der Magnetfelderzeugungseinrichtung 8, um den Kern 3 dauerhaft auf einen beliebigen Wert zu magnetisieren.

Die Impulsdauer 34 des Impulses 10 wird üblicherweise von der Magnetfelderzeugungseinrichtung 8 bestimmt, da beispielsweise die Anstiegszeit des Spulenstroms 4 deutlich länger ist als die tatsächlich für die Ummagnetisierung des Materials der Magneteinrichtung 8 benötigte Zeit. Deshalb kann über die Impulsdauer 34, gleichbedeutend der Anstiegszeit des Spulenstroms, die Feldstärke des resultierenden magnetischen Impulses 10 eingestellt werden. Der magnetische Impuls 10 definiert wiederum die dauerhafte Magnetisierung des hartmagnetischen Materials. Die Magnetisierung kann in Abhängigkeit von den magnetischen Eigenschaften der Magneteinrichtung 7 einen beliebigen Wert zwischen Null (entmagnetisiert) und einem Maximum (Remanenz) bzw. durch ummagnetisieren zwischen negativem und positivem Maximum dauerhaft annehmen. Es ist bevorzugt, dass die erzeugbare Feldstärke 31 der Magnetfelderzeugungseinrichtung 8 größer ist als die Koerzitivfeldstärke des hartmagnetischen Materials. Um eine Sättigung des Magneten 7 zu erreichen, ist es von Vorteil, wenn die von der Spule 4 erzeugbare Feldstärke in Abhängigkeit vom Magnetmaterial vorzugsweise ungefähr den fünffachen Wert oder mehr der Koerzitivfeldstärke erreicht. Dadurch wird sichergestellt, dass eine beliebige Magnetisierung der Magneteinrichtung 7 zuverlässig und reproduzierbar vorgenommen werden kann.

Fig. 2 stellt einen Ummagnetisierungsvorgang schematisch dar. Dargestellt ist die magnetische Feldstärke 9 über die Zeit, wobei die Feldstärke 9 der Magneteinrichtung 7 gepunktet und die Feldstärke 31 der Magnetfelderzeugungseinrichtung 8 durchgezogen dargestellt ist. Die magnetische Feldstärke 9 der Magneteinrichtung wird dabei von einer ersten Feldstärke 9a auf eine höhere zweite Feldstärke 9b angehoben.

Deutlich erkennbar ist, dass im linken Teil des Diagramms die Magnetfelderzeugungseinrichtung 8 bis auf den kurzen Impuls 10 nicht in Betrieb und ihre Feldstärke 31 deshalb auch Null ist. Ihr Feld wird für den Normalbetrieb nicht benötigt, weshalb auch keine Energie zugeführt werden muss.

Lediglich für die Ummagnetisierung wird kurzzeitig Energie benötigt, in diesem Fall um die Magnetisierung 9 der Magneteinheit 7 zu verstärken. Beispielsweise kann in diesem Fall durch einen kurzen Strompuls in der Spule 4 die Magnetisierung 9 des Magneten 7 verstärkt werden, um den Strömungswiderstand des Ventils 1 dauerhaft zu erhöhen.

Während die Impulslänge 34 für den magnetischen Impuls 10 nur sehr kurz ist und im Bereich von einigen Millisekunden liegen kann, weist der Magnet 7 bzw. die Magneteinrichtung 7 anschließend dauerhaft die hohe magnetische Feldstärke 9b auf, die bei einer entsprechenden Magnetfeldstärke 31 des magnetischen Impulses 10 auch bis in die Sättigung des verwendeten hartmagnetischen Materials reichen kann.

Es ist zu beachten, dass die Kurvenverläufe in Figur 2 nur schematisch dargestellt sind. Der Impuls 10 verläuft im Detail betrachtet nicht als Sprung sondern weist eine von Magnetkreis 7 und Spule 4 abhängige Anstiegszeit auf, nach der sich die unter den gegebenen Voraussetzungen maximale Feldstärke 31 einstellt. Bei konstanter Versorgung der Spule 4 kann innerhalb dieser Anstiegszeit die Stärke des Impulses 10 über die Impulsdauer 34 eingestellt werden.

Ab einer gewissen Impulsdauer 34 bringen längere Impulse 10 keine weitere Erhöhung der Magnetisierung 9. Die Stärke des Impulses 10 hängt in diesem Fall nur von der Feldstärke 31 ab, welche über die Versorgung der Spule 4 verändert werden kann. Der Spulenstrom kann beispielsweise über die Höhe der Versorgungsspannung oder bei konstanter Spannung über PWM-Modulation eingestellt werden.

Denkbar ist die Möglichkeiten zu kombinieren und die Stärke des Impulses 10 über die Impulsdauer 34 und Feldstärke 31 zu verändern. Der Impuls 10 muss nicht rechteckförmig sein, sondern kann beliebige Kurvenverläufe wie beispielsweise sinusförmig (Halbwelle) oder sägezahnförmig sein. Insbesondere Kurvenverläufe von Kondensatorentladungen sind denkbar.

Weiterhin zeigt Fig. 2 im rechten Teil des Diagramms schematisch noch eine Situation, bei der die Spule 4 auch zur zeitlichen Modifikation des wirksamen Magnetfeldes 9 verwendet wird. Wird die Spule 4 nur mit einem geringen und z.B. zeitlich variablen Magnetfeld 31a beaufschlagt, welches in Fig. 2 im rechten Teil durchgezogen eingezeichnet ist, so wird das insgesamt wirksame Magnetfeld 9 bzw. 9c dementsprechend beeinflusst und je nach Polarisation verstärkt oder geschwächt. Damit ist auch eine dynamische Beeinflussung des wirkenden magnetischen Feldes 9 möglich, ohne die Magnetisierung des hartmagnetischen Materials zu verändern.

Aus Fig. 2 ist ersichtlich, dass die Energieeinsparung gegenüber einem herkömmlichen System, das dauernd Strom benötigt, erheblich ist. Die Einsparung hängt auch von der Häufigkeit der Ummagnetisierungen ab. Doch auch bei häufigem Ummagnetisieren, beispielsweise im Sekundentakt, ist der Strom- und Energiebedarf niedriger als bei einem vergleichbaren Dämpfer nach dem Stand der Technik. Wird die Ummagnetisierung nur bei Bedarf betätigt, beispielsweise bei einem Stoßdämpfer bei Wechsel der Fahrbahnbeschaffenheit, dann tritt der Vorteil gegenüber anderen Systemen noch erheblich deutlicher zu Tage.

Durch magnetische Impulse 10 umgekehrter Polarität kann die Magnetisierung der Magneteinrichtung 7 geschwächt oder umgepolt werden. Eine Entmagnetisierung kann auch durch ein schwächer werdendes magnetisches Wechselfeld erzeugt werden, wobei das magnetische Wechselfeld aus sinusförmigen Halbwellen oder einer anderen beliebigen Pulsform mit wechselnder Polarität und abnehmender Amplitude bestehen kann.

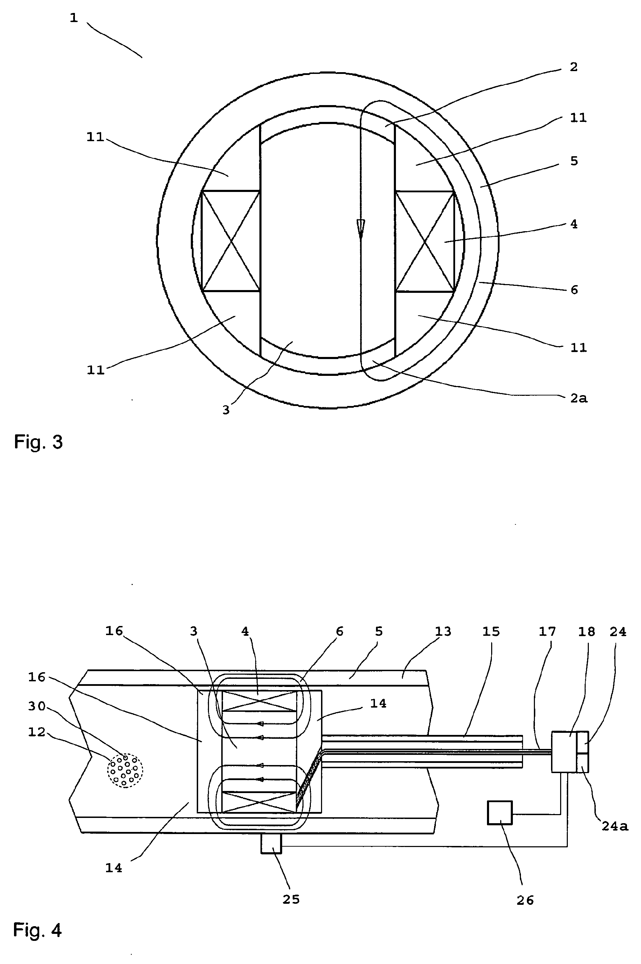

Fig. 3 zeigt einen Querschnitt durch eine Ausführungsvariante eines erfindungsgemäßen Ventils 1, wobei zur Übersichtlichkeit eine Feldlinie 6 des Magnetfeldes 9 eingezeichnet ist. In dem Bereich der Strömungskanäle 2 treten die Feldlinien 6 nahezu senkrecht (normal zu den Polflächen 16) durch den Spalt 27 hindurch und wirken normal zur Strömungsrichtung der magnetorheologischen Flüssigkeit 12. Der rheologische Effekt erreicht dadurch sein Maximum.

Der zentrale Kern 3 besteht aus einem hartmagnetischen Material und ist in Richtung der eingezeichneten Feldlinie 6 magnetisiert. Direkt an den Kern 3 angrenzend sind Strömungskanäle 2 und 2a, welche senkrecht zu der Zeichnungsebene durchströmt werden.

Der das Ventil 1 umgebende Ringleiter 5 dient einerseits als Begrenzung der Strömungskanäle 2, 2a und andererseits als Rückschluss für das Magnetfeld. Die Magneteinrichtung 7 besteht aus dem Kern 3 und dem Ringleiter 5, wobei im Ventil 1 zusätzlich noch eine Spule 4 und Isolatoren 11 vorgesehen sind. Die verbleibenden Spalte 27 dienen als Strömungskanäle 2 und 2a.

Vorteilhaft ist es, nur den Anteil der Magneteinrichtung 7 aus hartmagnetischem Material zu fertigen, der notwendig ist um eine bestimmte Feldstärke 9 und Flussdichte im restlichen Teil der Magneteinrichtung 7 und im Strömungskanal 2 aufrecht erhalten zu können. Beispielsweise kann nur ein Teil des Kerns 3 aus Alnico sein und der Rest aus einem anderen ferromagnetischen Material bestehen.

Möglich ist es auch, die gesamte Magneteinrichtung 7 aus einem Material mit hartmagnetischen Eigenschaften zu fertigen. Werden beispielsweise Kern 3 und Ringleiter 5 aus hartmagnetischem Material gefertigt, kann deren jeweilige Koerzitivfeldstärke kleiner sein als wenn nur ein Teil des Kerns 3 aus hartmagnetischem Material besteht.

Auf beiden Seiten des Kerns 3 ist in der Darstellung gemäß Fig. 3 eine Spule 4 erkennbar, die den Kern 3 umgibt und als Magnetfelderzeugungseinrichtung 8 einsetzbar ist. Das Magnetfeld 31 der Spule 4 überlagert das Feld der Magneteinrichtung 7 und kann bei entsprechender Stärke die Magnetisierung des Kerns 3 dauerhaft verändern.

Leichte Überlagerungen des Magnetfelds 31, welche die Magnetisierung der Magneteinrichtung nicht dauerhaft ändern, können ebenfalls von der Spule 4 erzeugt werden. Durch das wirksame Magnetfeld 9 wird dabei der Arbeitspunkt des Ventils 1 festgelegt, kleine und schnelle Korrekturen im Bereich des Arbeitspunktes können durch die Spule 4 mit verhältnismäßig geringem Energieaufwand umgesetzt werden.

Zusätzlich sind an den Seiten des Kerns 3 noch Isolatoren 11 vorgesehen, die die Strömungskanäle 2 und 2a seitlich begrenzen und magnetisch nicht bzw. schlecht leiten. Das Material der Isolatoren 11 stellt dem magnetischen Fluss einen großen Widerstand entgegen, weshalb sich dieser zum größten Teil innerhalb des Kerns 3 und Ringleiters 5 ausbreitet und die Strömungskanäle 2 und 2a möglichst senkrecht durchtritt.

Das Ventil 1 wird in der Ausführung gemäß Fig. 3 durch den Ringleiter 5, den darin aufgenommenen Kern 3, die Spule 4 und die magnetischen Isolatoren 11 sowie die Strömungskanäle 2 und 2a gebildet.

Der Ringleiter 5 kann beispielsweise als Druckkörper ausgeführt sein und in ein Leitungssystem integriert werden, wo das Ventil 1 zur Steuerung der Strömung eingesetzt werden kann.

Ein Ventil 1 gemäß dieser Ausführung kann aber auch beispielsweise in einem Kolben 14 eines Dämpfers 13 oder Stoßdämpfers eingesetzt werden. Vorteilhaft ist dabei, dass die Dämpfungseigenschaften mit einem Strompuls 10 verändert und in Folge ohne Energiezufuhr dauerhaft gehalten werden können.

Fig. 4 zeigt einen schematischen Längsschnitt durch einen Bereich eines magnetorheologischen Stoßdämpfers 13, wobei zum besseren Verständnis wieder Feldlinien 6 eingezeichnet sind.

Die Magneteinrichtung 7 besteht hier aus einem hartmagnetischen Kern 3, den Polkappen 16 und dem Ringleiter 5. Der hartmagnetische Kern 3 erzeugt je nach Magnetisierung ein Magnetfeld 9, er ist also ein einstellbarer Magnet. Auch hier gilt, dass jeder beliebige Teil der Magneteinrichtung 7 vollständig oder auch nur teilweise aus hartmagnetischem Material bestehen kann.

Die an den Kern 3 angrenzenden Polkappen 16 leiten das Feld zum Strömungskanal 2, welcher im Bereich der Polkappen 16 vom Magnetfeld 9 durchsetzt sein kann. Über den Ringleiter 5 wird das Magnetfeld 9 auf die gegenüberliegende Seite des Kolbens 14 zurück geführt.

Der Kern 3 ist von einer elektrischen Spule 4 umgeben, welche über einen magnetischen Impuls 10 die Magnetisierung des Kerns 3 dauerhaft verändern kann. Die Magnetisierung kann dabei aufgehoben werden, einen beliebigen Wert zwischen Null und der maximal möglichen Magnetisierung (Remanenz) annehmen oder umgepolt werden.

Abhängig vom wirksamen Magnetfeld 9 entsteht im Strömungskanal ein Strömungswiderstand, der eine Bewegung des Kolbens 14 entsprechend hemmt. Die Relativbewegung des Kolbens 14 zum Ringleiter 5 wird durch eine Kolbenstange 15 übertragen.

Schematisch sind in der Kolbenstange 15 Verbindungskabel 17 eingezeichnet, welche die Spule 4 mit der Versorgung verbinden und Sensordaten des Sensors 25 übertragen kann. Die ebenfalls schematisch eingezeichnete Steuereinrichtung 18 kann Steuer- und Regelelemente, die Energieversorgung 24, Sensoren 25, eine Kondensatoreinrichtung 24a oder eine Schwingkreiseinrichtung 26 umfassen. Bei einem Dämpfer nach dem Stand der Technik wird versucht die verbleibende Restmagnetisierung des Materials möglichst klein zu halten. Ein magnetisches Restfeld würde im stromlosen Zustand den Strömungswiderstand erhöhen und somit den Einstellbereich des Dämpfers 13 verringern. Zudem widersetzt sich das Restfeld einer schnellen Ummagnetisierung, was die Ansprechzeit des Dämpfers 13 herabsetzen kann.

Der in Fig. 4 dargestellte Dämpfer 13 weist im Gegensatz zum Stand der Technik hartmagnetisches Material auf, um ein durch dessen Magnetisierung dauerhaft bestehendes und beliebig einstellbares Magnetfeld 9 zu erhalten. Eine bestehende Einstellung des Dämpfers 13 bleibt auch im stromlosen Zustand erhalten, bis durch einen magnetischen Impuls 10 durch die Spule 4 die Einstellung geändert wird.

Daraus ergibt sich ein wesentlicher Vorteil des in Fig. 4 dargestellten Dämpfers 13 gegenüber dem Stand der Technik: nur beim Verstellen des Dämpfers 13 wird Energie benötigt, der Betrieb kann ansonsten völlig stromlos erfolgen. Des Weiteren ergeben sich durch den Einsatz des magnetorheologischen Fluids weitere Vorteile, wie z.B. eine schnelle Reaktionszeit, ein weiter Verstellbereich, ein robuster Aufbau, keine bewegten mechanischen Einstellelemente, die elektrische Ansteuerbarkeit etc.

In einem typischen Anwendungsfall, wenn der Dämpfer nur mit wechselndem Anforderungsprofil wie z.B. wechselndem Untergrund beim Fahrraddämpfer verstellt wird, ist die Energieeinsparung gegenüber einem Dämpfer nach Stand der Technik sehr groß. Und gerade bei mobilen Applikationen, in denen das Systemgewicht und die Einsatzzeit entscheidend sind, können kleinere Batterien und deutlich längere Betriebszeiten ein ganz entscheidender technischer Vorteil sein oder die Verwendung erst ermöglichen.

Zur Abdichtung des Dämpferkolbens 14 in dem Dämpfergehäuse kann ein Kolbenring als Dichtung vorgesehen sein. Es ist aber auch möglich, dass das Magnetfeld der Magneteinrichtung 7 selbst oder zusätzlich angebrachter Magnete für eine vollständige Abdichtung zum Dämpfergehäuse sorgt, da das Magnetfeld 9 der Magneteinrichtung 7 eine Verkettung der Partikel 30 in dem magnetorheologischen Fluid 12 bewirkt, sodass eine ausreichende Abdichtung zwischen dem Dämpfergehäuse und dem darin angeordneten Kolben 14 erzeugt wird.

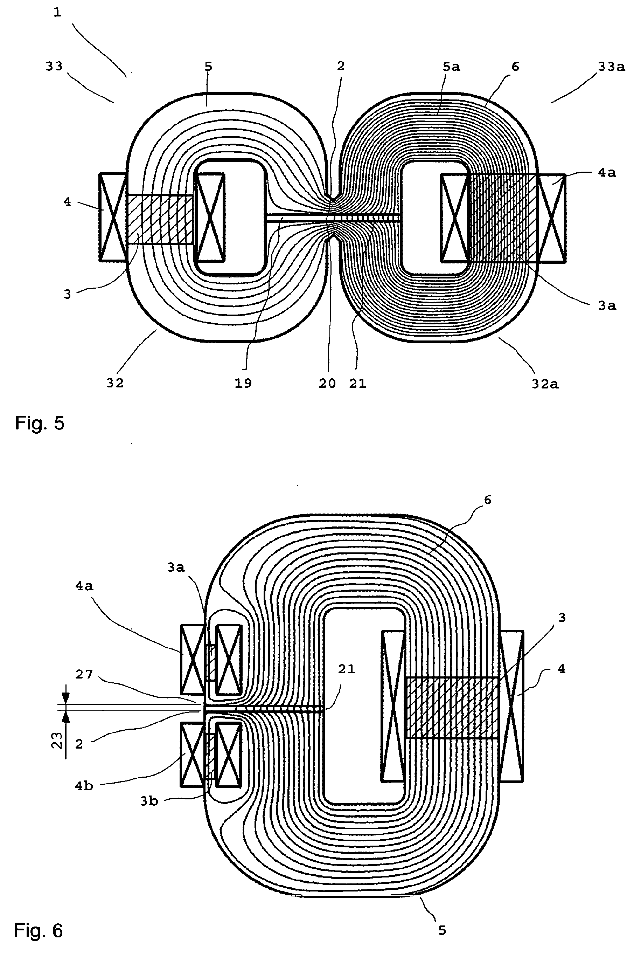

In den Fig. 5 und 6 sind weitere schematische Ausführungsbeispiele dargestellt, wobei zwei elektrische Spulen 4, 4a (Fig. 5) bzw. drei elektrische Spulen 4, 4a, 4b (Fig. 6) in Verbindung mit entsprechenden Kernen 3, 3a und 3b eingesetzt werden. Beide Ausführungsbeispiele haben gemeinsam, dass sie das wirksame Magnetfeld 9 im Strömungskanal 2 nicht nur in seiner Stärke, sondern auch in seiner Form verändern können.

In Fig. 5 ist ein zentraler Strömungskanal 2 vorgesehen, wobei auf beiden Seiten C-förmige Elemente 32 und 32a vorgesehen sind, die insgesamt den Ringleiter 5 erzeugen. Dabei können die linke Hälfte 33 und die rechte Hälfte 33a zunächst getrennt betrachtet werden. Das in der rechten Hälfte 33a von dem Kern 3a erzeugte Magnetfeld wird durch den Ringleiter 5a bis zu dem Strömungskanal 2 gelenkt, der hier spaltartig ausgebildet ist.

In dem Strömungskanal 2 ist eine magnetorheologische Flüssigkeit 12 vorgesehen, welche hier in dem Bereich der rechten Hälfte 33a durch die Magneteinrichtung 7 einem starken magnetischen Feld ausgesetzt ist. Dadurch wird auf der rechten Hälfte 33a ein Sperrabschnitt 21 erzeugt, der die Strömung dort maximal dämpft.

Die linke Hälfte 33 des Strömungskanals 2 wird im Wesentlichen durch das magnetische Feld des zweiten Kerns 3 beeinflusst. Hier im Ausführungsbeispiel wird vom linken Kern 3 ein schwaches Feld erzeugt, das dem Feld vom rechten Kern 3a entgegengesetzt gepolt ist, wie sich an der Dichte der Feldlinien des Magnetfeldes auch grafisch klar erkennbar ergibt. Dadurch wird ein Teil des Feldes vom rechten Kern 3a über den linken Kern 3 kurzgeschlossen und im linken Bereich des Strömungskanals 2 ist kein Feld vorhanden, weshalb die magnetorheologische Flüssigkeit 12 in diesem Bereich unbeeinflusst strömen kann.

In der Mitte des Strömungskanals 2 bildet sich der Übergangsabschnitt 20 aus, in dem die Feldstärke nach rechts zunimmt. Abhängig von der Druckdifferenz des strömenden Mediums werden nur der Durchlassabschnitt 19, zusätzlich ein Bereich des Übergangsabschnitts 20 oder der gesamte Strömungskanal 2 durchströmt. Daraus können sich z.B. bei Verwendung in einem Dämpfer 13 bestimmte Dämpferkennlinien ergeben, die über magnetische Impulse 10 der Spulen 4, 4a in einem großen Bereich verstellt werden können.

In Fig. 5 nicht dargestellt sind andere Magnetisierungen der Kerne 3, 3a wie beispielsweise eine gleich starke und gleichpolige Magnetisierung beider Kerne 3, 3a, welche ein homogenes Magnetfeld variabler Stärke im ganzen Strömungskanal 2 erzeugt. Über die Auslegung der Magneteinrichtung 7 und die Magnetisierung der Kerne 3, 3a kann das Magnetfeld 9 in Form und Stärke in einem großen Bereich so angepasst werden, dass weitgehend beliebige Strömungswiderstand-Geschwindigkeits-Kennlinien durch das Ventil 1 erzeugt werden können.

Ein beliebiger Teil der Kerne 3 und 3a oder der Ringleiter 5, 5a kann aus hartmagnetischem Material gefertigt werden, der von den Spulen 4 und 4a umwickelte Bereich eignet sich aber am besten, da dort besonders hohe und homogene Felder erzielt werden können.

In Fig. 6 ist eine schematische Lösung mit drei Kernen 3, 3a und 3b und den zugehörigen elektrischen Spulen 4, 4a und 4b dargestellt, wobei sich durch eine unterschiedliche Einstellung der jeweiligen Magnetisierung unterschiedlichste Bedingungen für den Strömungskanal 2 ergeben.

Die Summe der einzelnen Magnetfelder der Kerne 3, 3a und 3b ergibt ein Gesamtfeld 9, das den Strömungskanal 2 durchflutet. Dabei kann wie in Fig. 5 beschrieben Form und Stärke des resultierenden Magnetfelds 9 beeinflusst werden. Der rechte Kern 3 ist hier der Hauptkern, er bestimmt die grundsätzliche Stärke des Feldes der Magneteinrichtung 7. Die linksseitigen Kerne 3a und 3b sind kleiner und können als Steuerkerne das Feld der Magneteinrichtung 7 im Strömungskanal 2 beeinflussen.

Sind die Steuerkerne 3a, 3b gleich polarisiert wie der Hauptkern 3, dann herrscht im Strömungskanal 2 ein homogenes Magnetfeld, dessen Stärke von der Magnetisierung aller Kerne 3, 3 und 3b abhängt. Sind die Steuerkerne 3a und 3b umgekehrt gepolt wie der Hauptkern 3, dann kann sich im Strömungskanal 2 ein inhomogenes Magnetfeld ausbilden.

Wie bei Fig. 5 können so verschiedene Abschnitte wie Durchlassabschnitt 19, Übergangsabschnitt 20 und Sperrabschnitt 21 gebildet werden. Die Form der Abschnitte hängt von der Magnetisierung der einzelnen Kerne ab und kann über einen weiten Bereich eingestellt werden. Möglich ist es auch, die beiden Steuerkerne 3a und 3b gegensinnig zu polen (wobei dann einer wieder gleich gepolt ist wie der Hauptkern 3). Der Einstellbereich der Ventilkennlinien kann dadurch weiter vergrößert werden.

Im Gegensatz zu Fig. 5 muss das hartmagnetische Material im Bereich der Spulen 4, 4a und 4b angeordnet sein um im stromlosen Zustand ein definiertes Feld im Strömungskanal 2 erzeugen zu können. Alternativ kann allenfalls der Ringleiter 5 im direkt an den Strömungskanal angrenzenden Teilbereich hartmagnetische Eigenschaften aufweisen.

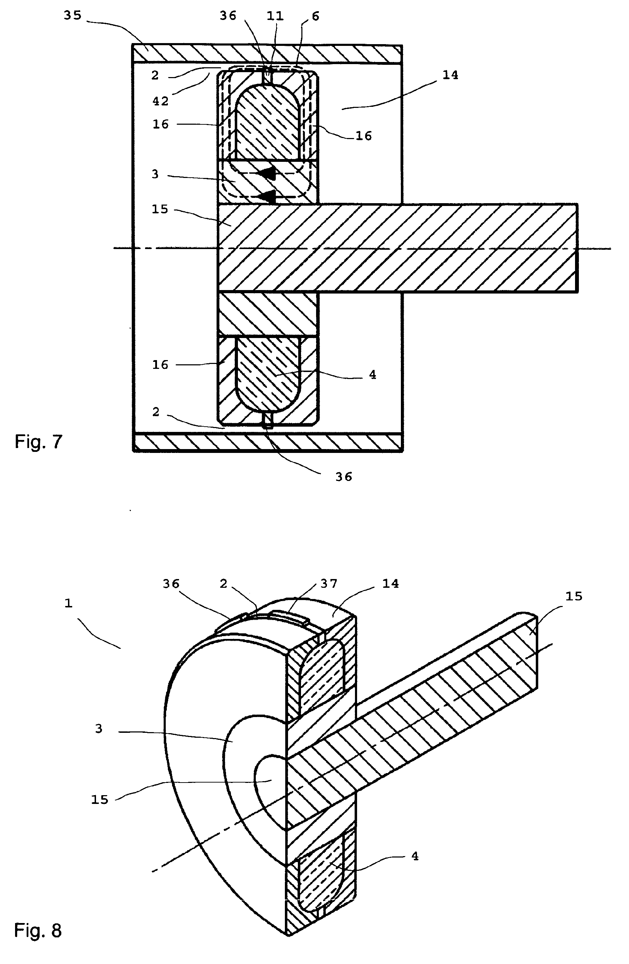

In den Figuren 7 bis 9 ist ein weiteres Ausführungsbeispiel dargestellt, bei dem das Magnetfeld als Dichtung eines Kolbens 14 dient. Die schematische Darstellung zeigt den Kolben 14 bzw. jenen Teil des Kolbens, der die beiden Seiten des Kolbens gegeneinander abdichtet. Derselbe Aufbau kann auch als einfaches Ventil 1 verwendet werden, bei dem möglicherweise auf weitere Strömungskanäle verzichtet werden kann. Dabei liegt zwischen dem Kolben 14 und dem Zylinder 35 ein Spalt als Strömungskanal 2 vor. Der Spalt kann sich über den vollständigen Umfang des Kolbens 14 oder auch nur Teilbereiche davon erstrecken.

Je nach Anwendung als Ventil oder als Dichtung kann der Strömungswiderstand bzw. die absperrbare Druckdifferenz von einer Kolbenseite zur Anderen über die Stärke des Magnetfelds variiert werden.

Der Spalt bzw. Strömungskanal 2 reduziert die Reibung gegenüber einer herkömmlichen Dichtung und dient als Überdrucksicherung bzw. mit der Remanenz oder nur einer Spule 4 als variable Überlastsicherung. Der Ringspalt 42 ist hier der steuerbare Strömungskanal 2 und bildet somit ein einfaches Ventil 1.

Bei Anwendungen mit magnetorheologischen Fluiden (MRF) 12 oder Ferrofluid kann mit einem Magnetfeld ein Volumen wie z.B. eine Hochdruckkammer 38 gegenüber einem zweiten Volumen wie z.B. einer Niederdruckkammer 39 abgedichtet werden. Dadurch lässt sich gegenüber herkömmlichen Dichtungen eine sehr kleine Reibung erreichen, was beispielsweise bei linearen Kolbenbewegungen oder rotierenden Wellen vorteilhaft ist. Gemessen wurde im konkreten Beispiel nur die halbe Verschiebekraft gegenüber Gummidichtungen.

In bestimmten Anwendungen ist es dabei besonders vorteilhaft, dass das MRF beim Erreichen einer gewissen Druckdifferenz durchbricht und sofort wieder sperrt, sobald die Druckspitze abgebaut ist. So können Systeme gegen Überlast abgesichert werden bzw. übernimmt die Dichtung die Funktion eines Sicherheitsventils 1. Wird das Magnetfeld der Dichtung durch ein Material mit veränderbarer Magnetisierung erzeugt, kann über die Magnetisierung auch die Druckdifferenz eingestellt werden, ab der das MRF durchbricht.

Das in Fig. 7 geschnitten dargestellte Ausführungsbeispiel zeigt den Aufbau eines Ventils 1 mit magnetischer Dichtung. Der Kolben 14 besteht hier aus einer Kolbenstange 15, die von einem Kern 3 umgeben ist. Radial weiter außerhalb sind zwei umlaufende Eisenpole 16 vorgesehen, an denen eine Spule 4 aufgenommen ist. Die Stromzufuhr kann beispielsweise über eine hohle Kolbenstange 15 oder drahtlos von außen erfolgen.

Radial außen ist ein magnetischer Isolator 11 zwischen den Polen 16 vorgesehen. Der magnetische Isolator 11 kann zugleich als Stützring 36 und/oder als Führungsring verwendet werden. Radial innen befindet sich der Kern 3, welcher zumindest teilweise aus hartmagnetischem Material besteht. Hier kann jedes Element des magnetischen Kreises, wie beispielsweise die Eisenpole 16, zumindest teilweise aus hartmagnetischem Material bestehen.

Im magnetisierten Zustand erzeugt der Kern 3 ein durch die Feldlinien 6 im oberen Bereich von Fig. 7 dargestelltes Magnetfeld 9, welches radial außerhalb des Kolbens 14 über das MRF geschlossen wird. In diesem Bereich verdickt sich das MRF derart, dass eine Dichtungsfunktion von einer Kolbenseite 38 zur anderen Kolbenseite 39 gegeben ist. Abhängig von der Stärke des Magnetfelds wird in diesem Bereich das Strömen von MRF bis zu einer gewissen Druckdifferenz verhindert.

Bei Überlast (Überdruck bzw. Druck über gewünschtem oder voreingestellten Sollwert) bricht der gesamte Bereich des Ringspaltes 42 durch, jedoch nur solange bis die eingestellte maximale Druckdifferenz unterschritten wird. Gegenüber mechanischen Überlastsystemen sind die sehr schnelle Reaktionszeit und das Öffnen des gesamten Strömungskanals 2 von Vorteil. Außerdem können keine mechanisch bewegten Teile den Strömungskanal 2 verschleißen.

Durch die Spule 4 kann die Magnetisierung des hartmagnetischen Materials verändert werden. Ein einzelner kurzer Impuls reicht um die Magnetisierung des hartmagnetischen Materials dauerhaft zu verändern und somit die maximal sperrbare Druckdifferenz anzupassen.

Der dargestellte Aufbau kann als Magnetdichtung auch Teil einer größeren Kolbeneinheit sein oder so wie gezeichnet als einfacher Kolben 14 verwendet werden. Ein möglicher einfacher Kolbenaufbau verzichtet auf weitere Strömungskanäle oder auf anderweitig beinflussbare Kanäle und verwendet den radial außen liegenden Spalt mit MRF als.Strömungskanal 2. Sinngemäß kann dieser Aufbau auch zur Abdichtung von Wellen, Linearführungen oder Strömungskanälen mit beliebiger Form verwendet werden.

Mehrere der dargestellten Aufbauten können zu einer größeren mehrpoligen Kolbeneinheit kombiniert werden um beispielsweise die sperrbare Druckdifferenz zu erhöhen.

Vorzugsweise schließt sich das Magnetfeld über den Ringspalt 42 und nicht über den Zylinder 35, da hierbei der Zylinder 35 aus einem magnetisch nicht leitenden Material wie zum Beispiel Aluminium oder Kunststoff gefertigt werden kann und dadurch wesentlich leichter aufgebaut werden kann als mit ferromagnetischem Material. Das Magnetfeld versucht über dem Stützring 36 "Polster" aus MRF zu bilden, wodurch der Kolben 14 auch automatisch zentriert wird.

Ein ferromagnetischer Zylinder 35 wird vom Magnetfeld der Dichtung angezogen und könnte außermittig/exzentrisch positioniert werden, was die Grundreibung und den Verschleiß erhöhen könnte. In solchen Fällen bietet sich der Einsatz eines Stützringes 36 mit Stütznasen 37 an. Mit solchen Führungs- und Stützelementen ist auch ein Aufbau mit ferromagnetischem Zylinder sinnvoll. Alternativ kann über eine durchgehende Kolbenstange 15 der Kolben 14 beidseitig gestützt / geführt werden.

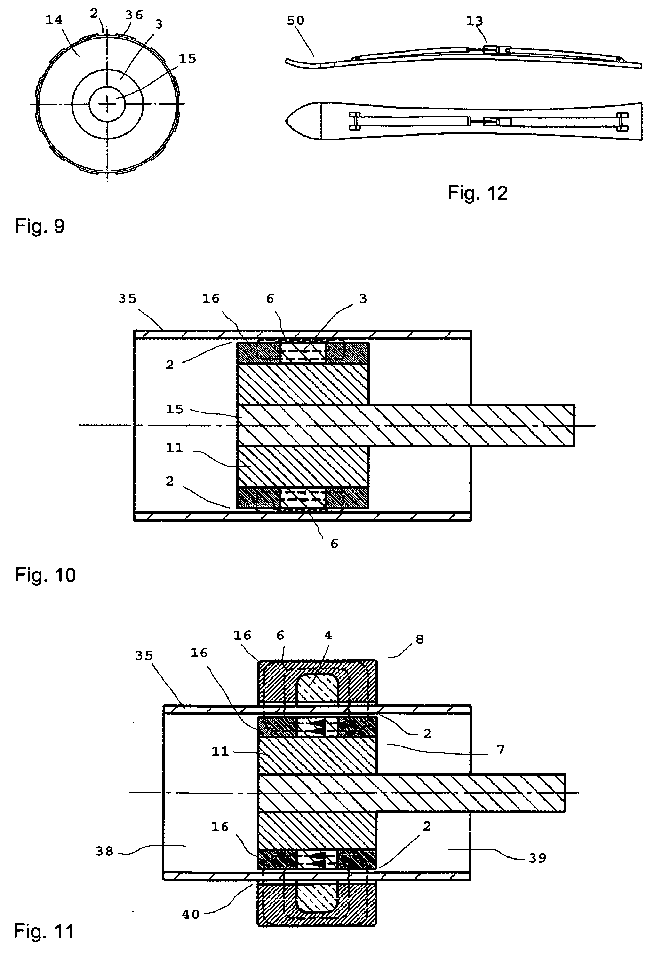

Fig. 9 zeigt den Kolben 14 mit dem Stützring 36 in einer Vorderansicht. Zwischen den einzelnen Stütznasen 37 verbleibt genügend Spalt, um den Strömungskanal 2 zu bilden.

Im Vergleich zu einem herkömmlichen Ventil nach dem Stand der Technik verfügt ein erfindungsgemäßes Ventil 1 mit diesem Aufbau über einen wesentlich besseren Energie- und Wärmehaushalt. Die Spule 4 muss nur einmal zu Einstellen der gewünschten Magnetisierung einen magnetischen Impuls erzeugen. Die Magnetisierung kann dann in Folge dauerhaft und ohne weitere Energiezufuhr gehalten werden. Der mögliche geringe Energieverbrauch dieser Dichtung bzw. dieses Ventils 1 ist generell vorteilhaft und insbesondere bei portablen Anwendungen.

Im Vergleich zu herkömmlichen Dichtungen wie beispielsweise O-Ringen hat eine Dichtung nach erfindungsgemäßem Aufbau eine wesentlich kleinere Reibung und ein dementsprechend besseres Stick-Slip-Verhalten. Zudem müssen die Oberflächen nicht so hohe Toleranzen und Oberflächeneigenschaften aufweisen wie jene von herkömmlichen Dichtungen.

Figuren 10 und 11 zeigen einen mit den Figuren 7 bis 9 vergleichbaren Aufbau. Die Magneteinrichtung 7 mit dem Kern 3 aus hartmagnetischem Material und den Eisenpolen 16 befindet sich innerhalb des Zylinders 35 und ist über eine nichtmagnetische Hülse 11 mit der Kolbenstange 15 verbunden.

Figur 10 zeigt den Aufbau im normalen Betriebszustand, das heißt im Betrieb mit gleichbleibenden Eigenschaften (Sperrdruck bzw. Strömungswiderstand). Die Magnetisierung des hartmagnetischen Materials wird nicht verändert. Das durch die jeweilige Magnetisierung des Kerns 3 erzeugte Magnetfeld 9 wird über die Pole 16 radial nach außen zum Strömungskanal 2 geleitet, wo es über das MRF geschlossen wird.

Figur 11 Zeigt die Einheit aus Figur 10 während des Ummagnetisierens. Dafür ist eine Magnetfelderzeugungseinheit 8 nötig, die außerhalb des Zylinders liegen kann. Die Magnetfelderzeugungseinrichtung 8 befindet sich außerhalb des Zylinders 35 und kann durch diesen hindurch auf die Magneteinrichtung 7 wirken.

Dabei liegen sich die äußeren und die inneren Pole 16 im Wesentlichen gegenüber, wodurch sich das von der Magnetfelderzeugungseinrichtung 8 erzeugte Magnetfeld 31 über den Kern 3 schließen kann. Über magnetische Impulse 10 kann in diesem Betriebszustand die Magnetisierung des Kerns 3 verändert werden.

Der nichtmagnetische Zylinder 35 stellt für das Magnetfeld beim Ummagnetisieren einen zusätzlichen Widerstand dar, dieser kann aber durch eine größere Spule 4 oder stärkere Impulse kompensiert werden. Dafür sind durch den Zylinder 35 die außerhalb des Zylinders 35 liegenden Eisenpole 16 abgeschirmt und stellen im Normalbetrieb für die Magneteinrichtung 7 keinen magnetischen Kurzschluss dar. Alle oder zumindest ein Großteil der Feldlinien 6 werden im Strömungskanal 2 geschlossen.

Vorteilhaft an diesem Aufbau ist, dass die Energieversorgung der Spule 4 einfach machbar ist, da diese außen liegt und gegenüber der Versorgung unbeweglich sein kann. Zudem kann die entstehende Verlustleistung einfach abgeführt werden.

Der Kolben 14 muss sich nicht immer radial innerhalb der Magnetfelderzeugungseinrichtung 8 befinden, beide können auch beweglich relativ zueinander sein. Dann wird das Ändern der Magnetisierung vorzugsweise in einer bestimmten Relativposition vorgenommen. Vorstellbar ist, dass die Magnetfelderzeugungseinrichtung 8 zu einer externen Einheit gehört, welche im Normalbetrieb nicht mit dem Ventil 1 verbunden sein muss. Nur zum Ändern der Magnetisierung wie beispielsweise zum Einstellen einer bestimmten Dämpfkraft ist die externe Einheit nötig, im Normalbetrieb funktioniert das Ventil 1 ohne diese Einheit.

Vor allem bei portablen Einheiten kann dies ein bedeutender Vorteil sein, da dadurch Bauraum und Gewicht deutlich reduziert werden können. Ähnlich wie bei einem System mit wiederaufladbarer Batterie ist nur zum Laden bzw. zum Verstellen der Magnetisierung das Ladegerät bzw. die externe Einheit notwendig. Das Ladegerät bzw. die Magnetfelderzeugungseinrichtung 8 muss nicht immer mitgenommen werden und kann auch für verschiedene Systeme verwendet werden.

Da die Magnetfelderzeugungseinrichtung 8 nicht fest mit dem Kolben 14 verbunden sein muss, können die bewegten Massen sehr klein gehalten werden. Dadurch eignet sich der Aufbau für dynamische Anwendungen mit sehr schnellem Ansprechverhalten. Durch den kleineren Kolben 14 kann Bauraum und Gewicht eingespart werden, zudem kann beispielsweise bei gleicher Einbaulänge mehr Hub erreicht werden.

Es sind verschiedenste Ausführungen denkbar, wobei die Bewegung immer relativ zur Magnetfelderzeugungseinrichtung 8 ist.

Unter anderem sind folgende Varianten vorgesehen:
- Der Kolben 14 bewegt sich, der Zylinder 35 steht: Für eine Ummagnetisierung sollte sich der Kolben an einer bestimmten Position befinden.
- Der Kolben steht, der Zylinder bewegt sich: Eine Ummagnetisierung ist positionsunabhängig möglich.
- Kolben und Zylinder bewegen sich: Eine Ummagnetisierung ist an bestimmten Kolbenpositionen sinnvoll.

Bei Ausführungen in denen ein Ummagnetisieren nur abhängig von einer bestimmten Kolbenposition möglich ist, kann ein Sensor die aktuelle Kolbenposition erfassen. Es ist dabei möglich, die vorhandene Spule 4 der Magnetfelderzeugungseinrichtung 8 als Sensor zu verwenden. Je nach Anwendung kann die Spule 4 dabei passiv das Magnetfeld 6 des sich bewegenden, magnetisierten Kolbens 14 erfassen oder aktiv ein schwaches Feld erzeugen, welches abhängig von der Kolbenposition auch von einem nichtmagnetisierten Kolben beeinflusst wird.

Weitere Vorteile dieser Ausführungsform:
- Die Magnetfelderzeugungseinrichtung 8 liegt außen, wodurch der Kolben 14 sehr leicht ausgeführt werden kann, was niedere bewegte Massen bedeutet. Dadurch ergibt sich ein besseres Ansprechverhalten.
- Der Kolben 14 kann ohne Spule 4 kürzer gebaut werden, was wiederum die Massen reduziert und zu einer geringeren Bauhöhe bzw. mehr Hub führt.
- Die Verlustleistung der Spule 4 wird außerhalb der Kolben-/Zylindereinheit erzeugt, von wo die entstehende Wärme gut abgeführt werden kann.
- Eine Stromzufuhr zu sich bewegenden Teilen ist nicht notwendig, woraus sich ein einfacher und robuster Aufbau ergibt.
- Mit einer Elektrospule 4 können mehrere Aktoren (um)magnetisiert werden.
- Eine sichere Ummagnetisierung ist außerhalb von gefährlichen Orten möglich, beispielsweise an explosionsgeschützen Orten oder in Bereichen mit chemisch aggressiven Medien.

Eine weitere Anwendungsmöglichkeit einer externen Einheit zum Ummagnetisieren der Magneteinrichtung 7 ist die Absicherung vor Manipulation oder Sabotage. Ähnlich einem "magnetischem Schlüssel" kann mit einer externen Magnetfelderzeugungseinheit 8 verhindert werden, dass Unbefugte Geräte in Betrieb nehmen oder Einstellungen verändern.

Die Anwendung als adaptiver Strömungskanal 2 zwischen zwei MRF-Kammern mit unterschiedlichem Druck ist vorteilhaft. Es ergibt sich ein sehr einfacher Aufbau, der z.B. beim Ski gut einsetzbar ist.

Figur 12 zeigt als Anwendungsbeispiel einen Ski 50 mit einem Dämpfer 13 mit erfindungsgemäßem Aufbau. Dasselbe Prinzip kann auch für Dämpfer 13 in Fahrrädern, Prothesen, Fitnessgeräten und vielem mehr eingesetzt werden. Die Bewegung bzw. Verformung des Skis 50 wird hier gezielt zum Dämpfer 13 geleitet, der diese umwandelt und dadurch dämpft. Im Gegensatz zur Dämpfung mit verformbaren (elastischen) Elementen ist ein Kolben-Zylinder-Dämpfer 13 nach erfindungsgemäßem Aufbau gleichbleibend, schnell und einfach verstellbar und in weiten Bereichen anpassbar. Besonders die Langzeitstabilität (Reproduzierbarkeit über die Lebensdauer) ist viel höher als bei einem verformbaren Element. Skier nach dem heutigen Stand der Technik werden mit jedem Fahrtag weicher (Materialermüdung), wobei die Vorspannung schon nach ca. 50 Fahrtagen fast komplett weg sein kann. Bei einem Kolben-Zylinder-Dämpfer 13 ist dies nicht der Fall.

Abhängig von dem momentanen Fahrstil, der Pistenbeschaffenheit, der Temperatur und weiteren Parametern kann der Dämpfer 13 verstellt bzw. eingestellt und diese Einstellung stromlos gehalten werden. Durch die Remanenz wird eine elektrische Verstellung mit sehr kleinem Energiebedarf möglich, die jedoch trotzdem schnell und stufenlos ist.

Gerade beim Ski 50 ist es von großem Vorteil wenn die Einstellung der Dämpfung vollautomatisch vorgenommen wird ohne dass der Anwender eingreifen muss. Z.B. beim Wechsel vom Tiefschnee auf eine gut präparierte Piste soll sich das Verhalten des Skis 50 ändern, ohne dass der Skifahrer anhalten und die Skier abnehmen muss, um irgendwelche mechanischen Einstellungen vorzunehmen.

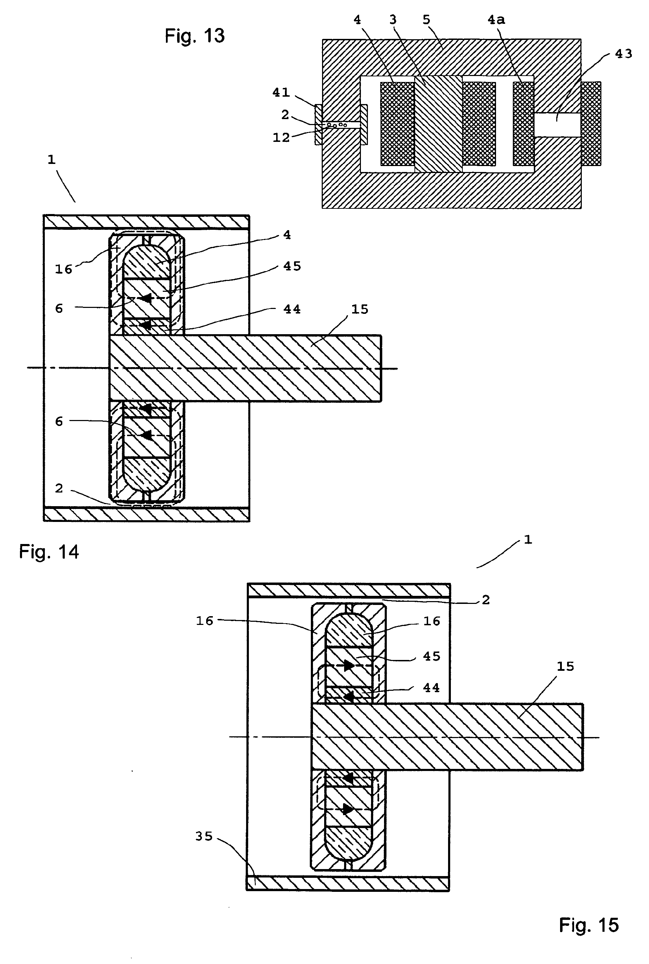

Fig. 13 zeigt schematisch einen möglichen Aufbau bei dem das Magnetfeld im Strömungskanal 2 schnell verändert werden kann ohne dass die aktuelle Magnetisierung des hartmagnetischen Materials geändert wird.

Dadurch wird eine dynamische Feldänderung ohne Änderung der Magnetisierung der Magneteinrichtung 7 möglich. Es können mehrere Magnetkreise auf denselben Strömungskanal 2 einwirken. Das ermöglicht Variationen des Magnetfeldes ausgehend vom über Remanenz eingestellten Arbeitspunkt und kann so deutlich schneller sein als ein reiner Remanenz-Aufbau aber immer noch deutlich weniger Energie benötigen als ein Aufbau ohne Remanenz.

Der Kern 3 besteht zumindest teilweise aus einem hartmagnetischen Material wie beispielsweise Alnico. Die Magnetisierung des Kerns 3 kann durch Impulse der Remanenzspule 4 verändert werden und erzeugt ein Magnetfeld 9 in der Magneteinrichtung 7, welches im Strömungskanal 2 auf das MRF 12 wirkt.

Die Magneteinrichtung 7 bietet auf der rechten Seite in Figur 13 dem magnetischen Fluss einen alternativen Pfad an, der von einem Steuerspalt 43 unterbrochen ist. Die Feldlinien 6 können also auf der linken Seite über den Strömungskanal 2 (Strömungsseite) oder auf der rechten Seite über den Steuerspalt 43 (Steuerseite) geschlossen werden. Im stromlosen Grundzustand sollte der gesamte oder zumindest ein großer Teil der Magnetisierung im Strömungskanal 2 wirken. Das wird erreicht, wenn die Reluktanz der Strömungsseite deutlich kleiner ist als die Reluktanz der Steuerseite.

Auf der Steuerseite befindet sich eine Steuerspule 4a, welche den steuerseitigen magnetischen Fluss beeinflussen kann. Je nach Stromfluss in der Steuerspule 4a kann ein Teil oder auch der gesamte magnetische Fluss des Kerns 3 im steuerseitigen Magnetkreis fließen, wodurch das Magnetfeld im Strömungskanal 2 verringert werden kann ohne dass die Magnetisierung des Kerns 3 verändert wird. Es ist auch möglich mit der Steuerspule 4a das Magnetfeld des Kerns 3 zu verstärken um im Strömungskanal 2 ein stärkeres Magnetfeld als im stromlosen Grundzustand zu erhalten.

Die Steuerspule 4a kann auch eingesetzt werden, wenn mit der Remanenzspule 4 die Magnetisierung des Kerns 3 verändert wird. Einerseits kann sie die Wirkung der Remanenzspule 4 verstärken, andererseits kann sie den für die Magnetisierung notwendigen Anteil des Magnetfeldes steuerseitig kompensieren, so dass im Strömungskanal 2 trotz Magnetisierungsimpuls 10 keine oder nur eine verhältnismäßig kleine Feldänderung auftritt.

Ein mögliches Anwendungsbeispiel ist ein Fahrraddämpfer oder Skidämpfer, dessen Remanenz dem aktuellen Untergrund entspricht. Das hartmagnetische Material wurde derart magnetisiert, das beispielsweise der Dämpfer 13 für die Fahrt auf dem Waldweg oder im Tiefschnee gut eingestellt ist und die durchschnittlichen auftretenden Stöße gut dämpft. Spontan auftretende Abweichungen wie ein sehr harter Schlag durch das Überfahren einer großen Wurzel oder eines Buckels können ohne Ummagnetisierung schnell ausgeglichen werden. Ändert sich jedoch der Untergrund, dann kann über eine andere Magnetisierung der (stromlos haltbare) Arbeitspunkt des Dämpfers 13 verstellt werden.

Die Figuren 14 und 15 zeigen eine Ausführungsvariante des Ventils 1 nach Fig. 7. Dabei wird der zwischen den Polen 16 liegende Kern 3 aus hartmagnetischen Materialien mit unterschiedlichen magnetischen Eigenschaften gefertigt.

Im dargestellten Beispiel besteht der radial innen liegende Bereich 44 des Kerns 3 aus NdFeB und der radial außen liegende Bereich 45 aus Alnico. Der Kern 3 besteht in der dargestellten Ausführung also zum Teil aus einem festen Permanentmagneten 3a, nämlich dem inneren Bereich 44, und zum Teil aus einem variablen Permanentmagneten 3b, nämlich dem äußeren Bereich 45.

Es können auch andere hartmagnetische Materialien verwendet werden, wobei diese zueinander unterschiedliche magnetische Eigenschaften aufweisen müssen. Es sind auch Anwendungen vorstellbar, bei denen dasselbe Material verwendet wird, aber über dessen Dimensionierung die magnetischen Eigenschaften verändert werden.

In Figur 14 sind beide Bereiche 44, 45 des Kerns 3 mit der gleichen Polarität magnetisiert. Das dadurch entstehende Feld 9 wird über die Pole 16 radial nach außen zum Strömungskanal 2 geleitet, wo es über das MRF 12 geschlossen wird. Zwischen den Polen 16 befindet sich eine elektrische Spule 4 und ein magnetischer Isolator 11.

Figur 15 zeigt das Ventil 1 aus Figur 14 in einem anderen Betriebszustand. Über einen magnetischen Impuls 10 der Spule 4 wurde die Magnetisierung eines Bereichs des Kerns 3 verändert. Dabei wurde die Polarität des äußeren Kernbereichs 45 mit variabler Magnetisierung 3b gedreht, so dass sie jetzt gegensinnig zur Polarität des inneren Kernbereichs 44 mit fester Magnetisierung 3a ist. Das Magnetfeld 9 der beiden Kernbereiche 44, 45 ist von ungefähr gleicher Stärke aber unterschiedlicher Polarität, so dass es über die Pole 16 geschlossen wird ohne den Strömungskanal 2 zu beeinflussen.

Abhängig von der Magnetisierung des äußeren Kernbereichs 45 mit variabler Magnetisierung 3b können auch Zwischenstellungen zwischen maximaler Feldstärke 9 (Fig. 14) und minimaler Feldstärke 9 (Fig. 15) im Strömungskanal 2 erzeugt werden. Dabei schließt der äußere Kernbereich 45 mit variabler Magnetisierung 3b einen beliebigen Teil des Magnetfeldes des inneren Kernbereichs 44 mit fester Magnetisierung 3a kurz oder verstärkt dieses.

Vorteilhaft an diesem Aufbau ist, dass vergleichsweise wenig Material ummagnetisiert werden muss um das Magnetfeld im Strömungskanal 2 zu ändern. Der Ummagnetisierungsvorgang kann dadurch schneller und mit weniger Energiebedarf durchgeführt werden.

Durch Materialien wie beispielsweise NdFeB kann mit relativ wenig Material ein sehr starkes Magnetfeld erzeugt werden, wodurch die Magneteinrichtung 7 kleiner wird. Zudem kann auch die Spule 4 kleiner werden, da sie weniger Material ummagnetisieren muss. Dadurch kann Bauraum und Gewicht gespart werden.

Besonders vorteilhaft ist, wenn der Aufbau so umgestaltet wird, dass die Spule 4 direkt auf den Kernbereich 45 mit variabler Magnetisierung 3b wirken kann. Beispielsweise wenn der Kolben 14 radial von innen nach außen wie folgt aufgebaut ist: Kernbereich 45 mit variabler Magnetisierung 3b (Alnico), Spule 4, Kernbereich 44 mit fester Magnetisierung 3a (NdFeB).

Es sind aber auch andere Aufbauvarianten denkbar, bei denen die beschriebenen Elemente in direktem Kontakt oder beabstandet voneinander angebracht sind. Zudem können auch weitere, das Magnetfeld im Strömungskanal 2 beeinflussende Elemente wie Spulen 4, Pole 16, Steuerspalte 43 etc. in der Magneteinrichtung 7 angeordnet sein.

### Bezugszeichenliste:

- 1: Ventil
- 2,2a: Strömungskanal
- 3,3a,3b: Kern
- 4,4a,4b: Spule
- 5,5a: Ringleiter
- 6: Feldlinie
- 7: Magneteinrichtung
- 8: Magnetfelderzeugungseinrichtung
- 9,9a,9b,9c: Magnetfeld der Magneteinrichtung
- 10: magnetischer Impuls der Spule
- 11: Isolator
- 12: magnetorheologische Flüssigkeit
- 13: Dämpfer, Dämpfergehäuse
- 14: Kolben
- 15: Kolbenstange
- 16: Pol
- 17: Verbindungskabel
- 18: Steuereinrichtung
- 19: Durchlassabschnitt
- 20: Übergangsabschnitt
- 21: Sperrabschnitt
- 23: Spaltbreite
- 24, 24a: Energiespeicher, Kondensator
- 25: Sensor
- 26: Schwingkreiseinrichtung
- 27: Spalt
- 30: Partikel
- 31, 31a: Magnetfeld der Magnetfelderzeugungseinrichtung
- 32, 32a: C-förmige Elemente
- 33: linke Hälfte
- 33a: rechte Hälfte
- 34: Impulsdauer
- 35: Zylinder
- 36: Stützring
- 37: Stütznase
- 38: Hochdruckkammer
- 39: Niederdruckkammer
- 40: Spalt
- 41: Kanalbegrenzung
- 42: Ringspalt
- 43: Steuerspalt
- 44: innerer Bereich
- 45: äußerer Bereich
- 50: Ski

## Patentansprüche

1. Ventil (1) für eine magnetorheologische Flüssigkeit (12) mit wenigstens einem von der magnetorheologischen Flüssigkeit (12) durchströmbaren Strömungskanal (2), welcher einem veränderbaren Magnetfeld (9) aussetzbar ist, so dass der Strömungswiderstand des Strömungskanals (2) über das Magnetfeld (9) in dem Strömungskanal (2) einstellbar ist, wobei das Magnetfeld (9) durch eine zumindest teilweise aus hartmagnetischem Material bestehende Magneteinrichtung (7) dauerhaft erzeugbar ist,
wobei,
die Magnetisierung der Magneteinrichtung (7) durch wenigstens einen magnetischen Impuls (10) einer Magnetfelderzeugungseinrichtung (8) dauerhaft veränderbar ist, um das in dem Strömungskanal (2) wirkende Magnetfeld (9) und damit den Strömungswiderstand des Strömungskanals (2) dauerhaft zu verändern, **dadurch gekennzeichnet, dass** die Zeitdauer der dauerhaften Veränderung der Magnetisierung des Magneteinrichtung (7) größer als die Impulslänge des magnetischen Impulses ist.

2. Ventil (1) nach Anspruch 1, wobei die dauerhafte Magnetisierung der Magneteinrichtung (7) durch wenigstens einen magnetischen Impuls (10) der Magnetfelderzeugungseinrichtung (8) auf einen beliebigen Wert zwischen Null und der Remanenz einstellbar ist und wobei insbesondere die Polarität der Magnetisierung veränderbar ist.

3. Ventil (1) nach mindestens einem der vorhergehenden Ansprüche, wobei mit der Magneteinrichtung (7) ein dauerhaftes statisches Magnetfeld (9) erzeugbar ist, welches durch ein dynamisches Magnetfeld der Magnetfelderzeugungseinrichtung (8) überlagerbar ist, ohne das dauerhafte Magnetfeld (9) dadurch zu verändern.

4. Ventil (1) nach mindestens einem der vorhergehenden Ansprüche, wobei die Magneteinrichtung (7) zumindest teilweise aus einem hartmagnetischen Material besteht, dessen Koerzitivfeldstärke größer als 1 kA/m und insbesondere größer als 5kA/m und vorzugsweise größer als 10kA/m ist.

5. Ventil (1) nach mindestens einem der vorhergehenden Ansprüche, wobei die Magneteinrichtung (7) zumindest teilweise aus einem Material besteht, welches eine Koerzitivfeldstärke kleiner als 1000 kA/m und vorzugsweise kleiner 500 kA/m und besonders bevorzugt kleiner als 100 kA/m aufweist.

6. Ventil (1) nach mindestens einem der vorhergehenden Ansprüche, wobei Form und Stärke des Magnetfelds (9) in der Magneteinrichtung (7) und/oder in dem Strömungskanal (2) dauerhaft erhalten bleiben und durch zumindest einen magnetischen Impuls (10) der Magnetfelderzeugungseinrichtung (8) verändert werden können.

7. Ventil (1) nach mindestens einem der vorhergehenden Ansprüche, wobei Teile der Magneteinrichtung (7) oder die Magnetfelderzeugungseinrichtung (8) relativ zueinander bewegbar sind.

8. Ventil (1) nach Anspruch 1, wobei einzelne Bereiche der Magneteinrichtung (7) unterschiedliche hartmagnetische Eigenschaften aufweisen, beispielsweise durch unterschiedliche Materialien oder unterschiedliche Geometrien, wodurch sie bei einem entsprechenden Magnetfeld der Felderzeugungseinheit (31) in Bereiche mit fester oder variabler Magnetisierung eingeteilt werden können.

9. Ventil (1) nach Anspruch 1, wobei eine Magnetfelderzeugungseinheit (31) vorgesehen ist, die beabstandet und ohne mechanische Verbindung zur Magneteinrichtung (7) sein kann.

10. Verfahren zum Betreiben eines Ventils (1), in welchem das durch eine Magneteinrichtung (7) dauerhaft erzeugte und in mindestens einem Strömungskanal (2) auf eine magnetorheologische Flüssigkeit (22) wirkende Magnetfeld (9) durch wenigstens einen magnetischen Impuls (10) einer Magnetfelderzeugungseinrichtung (8) dauerhaft verändert wird, **dadurch gekennzeichnet, dass** die Zeitdauer der dauerhaften Veränderung der Magnetisierung des Magneteinrichtung (7) größer als die Impulslänge des magnetischen Impulses ist.

11. Verfahren nach dem vorhergehenden Anspruch, wobei die magnetischen Impulse (10) durch wenigstens eine elektrische Spule (4) erzeugt werden, die insbesondere über wenigstens einen Kondensator (24) mit der benötigten Energie versorgt wird.

12. Verfahren nach mindestens einem der beiden vorhergehenden Ansprüche, wobei die magnetischen Impulse (10) kürzer als 1 Minute, vorzugsweise kürzer als 1 Sekunde und insbesondere kürzer als 10 Millisekunden sind.

13. Verfahren nach mindestens einem der drei vorhergehenden Ansprüche, wobei die Entmagnetisierung der Magneteinrichtung (7) durch ein gedämpftes magnetisches Wechselfeld, bestehend aus beliebigen, beispielsweise sinus-, rechteck- oder sägezahnförmigen Einzelpulsen mit wechselnder Polarität und abnehmender Stärke oder wenigstens einen magnetischen Impuls (10) erfolgt.

14. Verfahren nach mindestens einem der vier vorhergehenden Ansprüche, wobei Sensoren (25) zur direkten oder indirekten Bestimmung der Magnetisierung der Magneteinrichtung (7) verwendet werden und diese Sensoren (25) von einer Steuereinrichtung (18) verwendet werden können, um die Stärke der zu erzeugenden magnetischen Impulse (10) zu bestimmen.

15. Verfahren nach mindestens einem der fünf vorhergehenden Ansprüche, wobei die magnetischen Impulse (10) zur Änderung der Magnetisierung (9) der Magneteinrichtung (7) automatisch von einer Steuereinrichtung (18) generiert oder manuell ausgelöst werden können.

## Claims

1. Valve (1) for a magnetorheological fluid (12) comprising at least one flow duct (2) through which the magnetorheological fluid (12) can flow, which can be exposed to a variable magnetic field (9) so that the flow resistance of the flow duct (2) can be set by way of the magnetic field (9) in the flow duct (2) wherein a permanent magnetic field (9) can be generated by means of a magnetic device (7) consisting at least in part of a magnetically hard material,
wherein the magnetization of the magnetic device (7) can be permanently changed by at least one magnetic pulse (10) from a magnetic field generating device (8) so as to permanently change the magnetic field (9) operative in the flow duct (2) and thus the flow resistance of the flow duct (2),
**characterized in that** the duration of the permanent change to the magnetization of the magnetic device (7) is longer than is the pulse length of the magnetic pulse.

2. The valve (1) according to claim 1 wherein the permanent magnetization of the magnetic device (7) can be set by way of at least one magnetic pulse (10) from the magnetic field generating device (8) to any desired value between zero and remanence and wherein the magnetic polarization can in particular be changed.

3. The valve (1) according to at least one of the preceding claims wherein the magnetic device (7) can generate a permanent static magnetic field (9) on which a dynamic magnetic field from the magnetic field generating device (8) can be superimposed without changing the permanent magnetic field (9).

4. The valve (1) according to at least one of the preceding claims wherein the magnetic device (7) consists at least in part of a magnetically hard material whose coercive field strength is above 1kA/m and in particular above 5kA/m and preferably above 10kA/m.

5. The valve (1) according to at least one of the preceding claims wherein the magnetic device (7) consists at least in part of a material whose coercive field strength is beneath 1000 kA/m and preferably beneath 500 kA/m and particularly preferably beneath 100 kA/m.

6. The valve (1) according to at least one of the preceding claims wherein the shape and strength of the magnetic field (9) in the magnetic device (7) and/or in the flow duct (2) can be permanently maintained and can be varied by at least one magnetic pulse (10) from the magnetic field generating device (8).

7. The valve (1) according to at least one of the preceding claims wherein parts of the magnetic device (7) or the magnetic field generating device (8) are movable relative to one another.

8. The valve (1) according to claim 1 wherein individual regions of the magnetic device (7) show different magnetically hard properties for exemple by means of different materials or different geometries which, given an appropriate magnetic field from the field generating unit (31), allows their partitioning in regions showing static or variable magnetization.

9. The valve (1) according to claim 1 wherein a magnetic field generating unit (31) is provided which may be spaced apart from, having no mechanical connection with, the magnetic device (7).

10. Method for operating a valve (1) in which the permanent magnetic field (9) generated by a magnetic device (7) and acting on a magnetorheological fluid (22) in at least one flow duct (2) is permanently changed by way of at least one magnetic pulse (10) from a magnetic field generating device (8), **characterized in that** the duration of the permanent change to the magnetization of the magnetic device (7) is longer than is the pulse length of the magnetic pulse.

11. The method according to the preceding claim wherein the magnetic pulses (10) are generated by at least one electric coil (4) which is supplied with the energy required in particular by means of at least one capacitor (24).

12. The method according to at least one of the two preceding claims wherein the magnetic pulses (10) show a duration of less than 1 minute, preferably less than 1 second, and in particular less than 10 milliseconds.

13. The method according to at least one of the three preceding claims wherein the magnetic device (7) is de-magnetized by way of an attenuated alternating magnetic field consisting of single pulses of any desired shape such as sinus, square-wave, or sawtooth shapes showing heteropolarity and attenuating strength, or by at least one magnetic pulse (10).

14. The method according to at least one of the four preceding claims wherein sensors (25) are employed to directly or indirectly determine the magnetization of the magnetic device (7) and wherein a control device (18) may employ these sensors (25) to determine the strength at which the magnetic pulses (10) are generated.

15. The method according to at least one of the five preceding claims wherein the magnetic pulses (10) for changing the magnetization (9) of the magnetic device (7) can be automatically generated by a control device (18) or triggered manually.

## Revendications

1. Soupape (1) pour un fluide magnétorhéologique (12), comprenant au moins un canal d'écoulement (2) qui peut être parcouru par le fluide magnétorhéologique (12) et qui peut être exposé à un champ magnétique (9) modifiable de sorte que la résistance à l'écoulement du canal d'écoulement (2) peut être réglée par l'intermédiaire du champ magnétique (9) dans le canal d'écoulement (2), le champ magnétique (9) pouvant être généré de manière durable par un dispositif magnétique (7) fait au moins en partie de matériau magnétique dur, l'aimantation du dispositif magnétique (7) étant modifiable de manière durable par au moins une impulsion magnétique (10) d'un dispositif de génération de champ magnétique (8) afin de modifer à demeure le champ magnétique (9) agissant à l'intérieur du canal d'écoulement (2) et ainsi la résistance à l'écoulement du canal d'écoulement (2),
**caractérisée par le fait que** la durée de la modification durable de l'aimantation du dispositif magnétique (7) est supérieure à la longueur d'impulsion de l'impulsion magnétique.

2. Soupape (1) selon la revendication 1, dans laquelle l'aimantation durable du dispositif magnétique (7) peut être réglée à une valeur quelconque comprise entre zéro et la rémanence par au moins une impulsion magnétique (10) du dispositif de génération de champ magnétique (8), et dans laquelle en particulier la polarité de l'aimantation est modifiable.

3. Soupape (1) selon l'une au moins des revendications précédentes, dans laquelle le dispositif magnétique (7) permet de générer un champ magnétique (9) statique durable auquel peut être superposé un champ magnétique dynamique du dispositif de génération de champ magnétique (8) sans que le champ magnétique (9) durable soit ainsi modifié.

4. Soupape (1) selon l'une au moins des revendications précédentes, dans laquelle le dispositif magnétique (7) est fait au moins en partie d'un matériau magnétique dur dont le champ coercitif est supérieur à 1 kA/m et en particulier supérieur à 5 kA/m et de préférence supérieur à 10 kA/m.

5. Soupape (1) selon l'une au moins des revendications précédentes, dans laquelle le dispositif magnétique (7) est fait au moins en partie d'un matériau qui présente un champ coercitif inférieur à 1000 kA/m et de préférence inférieur à 500 kA/m et de manière particulièrement préférée inférieur à 100 kA/m.

6. Soupape (1) selon l'une au moins des revendications précédentes, dans laquelle la forme et l'intensité du champ magnétique (9) dans le dispositif magnétique (7) et/ou dans le canal d'écoulement (2) subsistent à demeure et peuvent être modifiées par au moins une impulsion magnétique (10) du dispositif de génération de champ magnétique (8).

7. Soupape (1) selon l'une au moins des revendications précédentes, dans laquelle des pièces du dispositif magnétique (7) ou du dispositif de génération de champ magnétique (8) sont déplaçables les unes par rapport aux autres.

8. Soupape (1) selon la revendication 1, dans laquelle des zones particulières du dispositif magnétique (7) présentent des propriétés magnétiques dures différentes, par exemple par des matériaux différents ou géométries différentes, ce par quoi, dans le cas d'un champ magnétique correspondant de l'unité de génération de champ (31), elles peuvent être divisées en zones à aimantation fixe ou variable.

9. Soupape (1) selon la revendication 1, dans laquelle une unité de génération de champ magnétique (31) est prévue qui peut être espacée du dispositif magnétique (7) et être exempte de liaison mécanique à celui-ci.

10. Procédé pour faire fonctionner une soupape (1) dans laquelle le champ magnétique (9) généré de manière durable par un dispositif magnétique (7) et agissant dans au moins un canal d'écoulement (2) sur un fluide magnétorhéologique (22) est modifié à demeure par au moins une impulsion magnétique (10) d'un dispositif de génération de champ magnétique (8), **caractérisé par le fait que** la durée de la modification durable de l'aimantation du dispositif magnétique (7) est supérieure à la longueur d'impulsion de l'impulsion magnétique.

11. Procédé selon la revendication précédente, dans lequel les impulsions magnétiques (10) sont générées par au moins une bobine électrique (4) qui est alimentée en énergie requise en particulier par au moins un condensateur (24).

12. Procédé selon l'une au moins des deux revendications précédentes, dans lequel les impulsions magnétiques (10) durent moins de 1 minute, de préférence moins de 1 seconde et en particulier moins de 10 millisecondes.

13. Procédé selon l'une au moins des trois revendications précédentes, dans lequel la désaimantation du dispositif magnétique (7) se fait par un champ alternatif magnétique amorti constitué par des impulsions individuelles quelconques, par exemple sinusoïdales, rectangulaires ou en dent de scie, ayant une polarité variante et une intensité décroissante, ou au moins une impulsion magnétique (10).

14. Procédé selon l'une au moins des quatre revendications précédentes, dans lequel on utilise des capteurs (25) pour la détermination directe ou indirecte de l'aimantation du dispositif magnétique (7), et ces capteurs (25) peuvent être utilisés par un dispositif de commande (18) afin de déterminer l'intensité des impulsions magnétiques (10) à générer.

15. Procédé selon l'une au moins des cinq revendications précédentes, dans lequel les impulsions magnétiques (10) pour modifier l'aimantation (9) du dispositif magnétique (7) peuvent être générées automatiquement par un dispositif de commande (18) ou être déclenchées manuellement.
